(19) Europäisches Patentamt
European Patent Office
Office européen des brevets

(11) **EP 3 428 856 A1**

(12) **EUROPEAN PATENT APPLICATION**
published in accordance with Art. 153(4) EPC

(43) Date of publication:
**16.01.2019 Bulletin 2019/03**

(51) Int Cl.:
***G06N 3/08*** (2006.01)

(21) Application number: **16893608.6**

(22) Date of filing: **28.11.2016**

(86) International application number:
**PCT/JP2016/085249**

(87) International publication number:
**WO 2017/154284 (14.09.2017 Gazette 2017/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.03.2016 JP 2016045614**

(71) Applicant: **Sony Corporation Tokyo 108-0075 (JP)**

(72) Inventor: **KOBAYASHI, Yoshiyuki Tokyo 108-0075 (JP)**

(74) Representative: **MFG Patentanwälte Meyer-Wildhagen Meggle-Freund Gerhard PartG mbB Amalienstraße 62 80799 München (DE)**

(54) **INFORMATION PROCESSING METHOD AND INFORMATION PROCESSING DEVICE**

(57)    [Object] To search for a network structure in accordance with an environment more efficiently.

[Solution] There is provided an information processing method including: generating, by a processor, another neural network with a different network structure from an evaluated neural network; acquiring an evaluation result of the generated neural network; updating a Pareto optimal solution relating to an evaluated neural network on a basis of the evaluation result of the generated neural network; and generating another neural network with a different network structure from a neural network relating to the Pareto optimal solution.

**FIG. 9**

EP 3 428 856 A1

**Description**

Technical Field

The present disclosure relates to an information processing method and an information processing apparatus.

Background Art

In recent years, a neural network which imitates a mechanism of a cranial neural system has attracted attention. Meanwhile, various methods for searching for an optimal solution among a plurality of candidates have been proposed. For example, Patent Literature 1 discloses an information processing method for obtaining a solution to a target problem using a genetic algorithm.

Citation List

Patent Literature

Patent Literature 1: JP 2009-48266A

Disclosure of Invention

Technical Problem

However, because the information processing method disclosed in Patent Literature 1 does not take into account a layer configuration or parameters specific to a neural network, it is difficult to directly apply the information processing method to search of a network structure relating to a neural network.
Therefore, the present disclosure proposes an information processing method and an information processing apparatus which can search for a network structure in accordance with an environment more efficiently.

Solution to Problem

According to the present disclosure, there is provided an information processing method including: generating, by a processor, another neural network with a different network structure from an evaluated neural network; acquiring an evaluation result of the generated neural network; updating a Pareto optimal solution relating to an evaluated neural network on a basis of the evaluation result of the generated neural network; and generating another neural network with a different network structure from a neural network relating to the Pareto optimal solution.
In addition, according to the present disclosure, there is provided an information processing apparatus including: a generating unit configured to generate another neural network with a different network structure from an evaluated neural network; and an evaluating unit configured to acquire an evaluation result of the generated neural network. The evaluating unit updates a Pareto optimal solution relating to an evaluated neural network on a basis of the evaluation result of the generated neural network, and the generating unit generates another neural network with a different network structure from a neural network relating to the Pareto optimal solution.
In addition, according to the present disclosure, there is provided an information processing apparatus including: an input unit configured to accept designation of a neural network by a user; and a control unit configured to control presentation of a Pareto optimal solution relating to an evaluated neural network. The control unit presents a Pareto optimal solution updated on a basis of an evaluation result of another neural network generated from the neural network designated by the user.

Advantageous Effects of Invention

As described above, according to the present disclosure, it is possible to search for a network structure in accordance with an environment more efficiently. Note that the effects described above are not necessarily limitative. With or in the place of the above effects, there may be achieved any one of the effects described in this specification or other effects that may be grasped from this specification.

Brief Description of Drawings

FIG. 1 is a diagram for explaining generation of a network according to the present disclosure.

FIG. 2 is a diagram illustrating a system configuration example according to the present disclosure.

FIG. 3 is a functional block diagram of an information processing apparatus according to the present disclosure.

FIG. 4 is a functional block diagram of an information processing server according to the present disclosure.

FIG. 5 is a network generation chart according to a first embodiment of the present disclosure.

FIG. 6 is a flowchart of mutation control according to the first embodiment.

FIG. 7 is a flowchart of crossover control according to the first embodiment.

FIG. 8A is an example of visualization of search process according to the first embodiment.

FIG. 8B is an example of visualization of search process according to the first embodiment.

FIG. 8C is an example of visualization of search process according to the first embodiment.

FIG. 9 is a presentation example of a search result according to the first embodiment.

FIG. 10A is an example of a found network structure according to the first embodiment.

FIG. 10B is an example of a found network structure according to the first embodiment.

FIG. 11A is an evaluation result of an information processing method according to the first embodiment.

FIG. 11B is an evaluation result of an information processing method according to the first embodiment.

FIG. 12 is a diagram explaining selection of an evaluation target according to a second embodiment of the present disclosure.

FIG. 13 is a conceptual diagram of Gaussian process according to the second embodiment.

FIG. 14 is a diagram explaining an area in which a Pareto optimal solution is updated according to the second embodiment.

FIG. 15 is an evaluation result of net2vec according to the second embodiment.

FIG. 16 is an example of an analysis result using net2vec according to the second embodiment.

FIG. 17A is a detailed example of the analysis result using net2vec according to the second embodiment.

FIG. 17B is a detailed example of the analysis result using net2vec according to the second embodiment.

FIG. 17C is a detailed example of the analysis result using net2vec according to the second embodiment.

FIG. 18A is a diagram illustrating comparison between search process according to the first embodiment and search process according to the second embodiment.

FIG. 18B is a diagram illustrating comparison between search process according to the first embodiment and search process according to the second embodiment.

FIG. 18C is a diagram illustrating comparison between search process according to the first embodiment and search process according to the second embodiment.

FIG. 19A is an evaluation result of an information processing method according to the second embodiment.

FIG. 19B is an evaluation result of an information processing method according to the second embodiment.

FIG. 19C is an evaluation result of an information processing method according to the second embodiment.

FIG. 19D is an evaluation result of an information processing method according to the second embodiment.

FIG. 20 is a diagram explaining setting of search according to the present disclosure.

FIG. 21 is a hardware configuration example according to the present disclosure.

Mode(s) for Carrying Out the Invention

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.

1. Search of network structure according to present disclosure
1.1. Neural network
1.2. Generation of neural network
1.3. System configuration example according to present disclosure
1.4. Information processing apparatus 10 according to present disclosure
1.5. Information processing server 30 according to present disclosure
2. First embodiment
2.1. Generation of neural network according to first embodiment
2.2. Search of network structure by updating Pareto optimal solution
2.3. Effect of search according to present embodiment
3. Second embodiment
3.1. Measurement of prediction error according to present embodiment

3.2. Calculation of feature vector relating to network structure
3.3. Effect of search according to present embodiment
3.4. Setting of search according to present disclosure
4. Hardware configuration example
5. Conclusion

<1. Search of network structure according to present disclosure>

<<1.1. Neural network»

A neural network refers to a model imitating a human cranial neural circuit and is technology for implementing a human learning ability on a computer. As described above, one feature of a neural network is that it has a learning ability. In a neural network, artificial neurons (nodes) forming a network by synaptic coupling are able to acquire a problem solving ability by changing a synaptic coupling strength through learning. In other words, a neural network is able to automatically infer a problem resolution rule by repeating learning.

Examples of learning by a neural network can include image recognition and speech recognition. In a neural network, it is possible to classify input image information into one of numbers from 0 to 9 by, for example, repeatedly learning handwritten number patterns. The learning ability of the neural network as described above has attracted attention as a key for advancing development of artificial intelligence. Further, pattern recognition of the neural network is expected to be applied in various kinds of industrial fields.

Meanwhile, it is known that accuracy of learning by a neural network largely depends on provided data and a network structure. That is, in learning by a neural network, quantity and quality of provided data directly affects performance. Further, even in the case where the same data is provided, there is a possibility that a large difference occurs in learning accuracy among neural networks with different network structures.

Further, in processing by a neural network, a calculation amount is one of important indexes as well as learning accuracy. In a neural network, a calculation amount is a value determined dependent on a network structure. Further, in a neural network, normally, learning accuracy tends to improve as a calculation amount increases.

However, because a calculation amount largely affects memory usage and execution time of hardware in which a neural network is mounted, a neural network with high learning accuracy is not always the best neural network. In other words, in a neural network, a calculation amount and learning accuracy have, so-called, trade-off relationship. Therefore, a method for searching for a network structure with higher learning accuracy while suppressing a calculation amount has been desired.

An information processing method and an information processing apparatus according to the present disclosure have been devised while attention is focused on search of a network structure as described above. Specifically, in the information processing method according to the present disclosure, it is possible to update a Pareto optimal solution relating to an evaluated neural network on the basis of an evaluation result of a generated neural network and present the Pareto optimal solution to a user. That is, with the information processing method according to the present disclosure, it is possible to search for an efficient network structure by repeating generation of a network and updating of a Pareto optimal solution, and present the network structure to the user.

<<1.2. Generation of neural network>>

Here, outline of generation of a neural network according to the present disclosure will be described. As described above, with the information processing method according to the present disclosure, it is possible to generate another neural network with a different network structure from an evaluated neural network which is the original neural network (hereinafter, also referred to as a seed network). Further, as will be described later, with the information processing method according to the present disclosure, it is possible to generate another neural network with a different network structure from a neural network relating to a Pareto optimal solution.

Generation of a neural network according to the present disclosure may be implemented by genetic operation including, for example, mutation, crossover, or the like. Here, the above-described mutation may be one obtained by modeling mutation of a gene observed in living organisms. That is, with the information processing method according to the present disclosure, it is possible to generate another neural network with a different network structure by causing a layer to mutate while using respective layers constituting a network to resemble genes.

Further, the above-described crossover may be one obtained by modeling partial exchange of a chromosome in crossing of living organisms. That is, with the information processing method according to the present disclosure, it is possible to generate the above-described another neural network by partially exchanging layer configurations of two networks. Note that details of mutation and crossover according to the present disclosure will be described later.

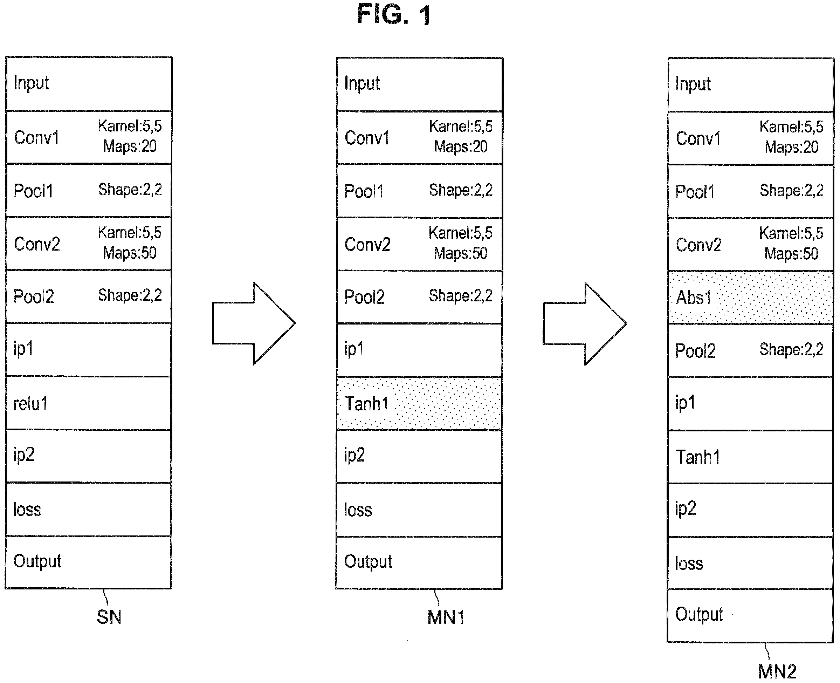

FIG. 1 is a diagram for explaining generation of a neural network by mutation. Referring to FIG. 1, it can be seen that a seed network SN includes 10 layers including "Input" and "Output". Further, as illustrated in an example in FIG. 1, the neural network according to the present disclosure may include a middle layer, an activating function, or the like, as well as the input and output layers.

For example, in the example in FIG. 1, "Conv1" and "Conv2" indicate Convolution layers, and "Pool1" and "Pool2" indicate Max-Pooling. Therefore, in "Conv1" and "Conv2", parameters such as kernel shapes and the number of output maps are displayed, and in "Pool1" and "Pool2", parameters indicating pool shapes are displayed. Note that, because each layer including the above-described example is widely used, detailed description will be omitted.

Subsequently, a neural network MN1 illustrated in FIG. 1 will be referred to. The neural network MN1 is another neural network generated by causing the seed network SN to mutate. Referring to the neural network MN1, it can be seen that part of a layer configuration changes from that in a network structure of the seed network SN. Specifically, in the neural network MN1, an activating function "relu1" relating to the seed network SN changes to another activating function "Tanh1". In this manner, with the information processing method according to the present disclosure, by changing layer types of layers constituting a network structure, it is possible to generate another neural network with a different network structure.

Further, referring to a neural network MN2, it can be seen that a network structure further changes from a state of the neural network MN1. In a network structure of the neural network MN2, an activating function "Abs1" is inserted in addition to the layer configuration of the neural network MN1. In this manner, with the information processing method according to the present disclosure, it is possible to generate another neural network with a different network structure by newly inserting a layer.

The outline of generation of a network according to the present disclosure has been described above. As described above, with the information processing method according to the present disclosure, it is possible to generate another neural network with a different network structure from the original network. Note that, while a case has been described above as an example where another neural network is generated by genetic operation, a method for generating a neural network according to the present disclosure is not limited to such an example. Generation of another neural network according to the present disclosure may be, for example, realized using a neural network which changes a network structure of an input network. Various methods including the above-described examples can be applied to generation of a neural network.

<<1.3. System configuration example according to present disclosure>>

An example of a system configuration for implementing the information processing method according to the present disclosure will be described next. As described above, one feature of the information processing method according to the present disclosure is that another neural network with a different network structure is generated from an evaluated neural network. Further, with the information processing method according to the present disclosure, it is possible to acquire an evaluation result of a generated neural network and update a Pareto optimal solution relating to the evaluated neural network on the basis of the acquisition result. That is, with the information processing method according to the present disclosure, in the case where the evaluation result of the other generated neural network exceeds the evaluation result of the evaluated neural network, it is possible to update the above-described another neural network as a Pareto optimal solution. Further, with the information processing method according to the present disclosure, it is possible to generate another neural network with a different network structure from a neural network relating to the Pareto optimal solution. That is, with the information processing method according to the present disclosure, it is possible to generate another new neural network using the above-described another neural network updated as the Pareto optimal solution as the evaluated neural network.

That is, with the information processing method according to the present disclosure, it is possible to search for a more efficient network structure by repeating generation of a network and updating of a Pareto optimal solution and present a result of the search to the user.

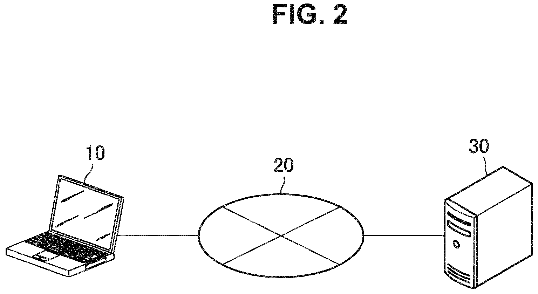

FIG. 2 is a diagram illustrating an example of a system configuration for implementing the information processing method according to the present disclosure. Referring to FIG. 2, the information processing system according to the present disclosure includes an information processing apparatus 10 and an information processing server 30. Further, the information processing apparatus 10 and the information processing server 30 are connected via a network 20 so that the information processing apparatus 10 and the information processing server 30 can perform communication with each other.

Here, the information processing apparatus 10 is an information processing terminal for presenting a result of search to the user. The information processing apparatus 10 may be, for example, a personal computer (PC), a smartphone, a tablet, or the like. Further, the information processing server 30 is an information processing apparatus which generates another neural network from the seed network and updates a Pareto optimal solution on the basis of the evaluation result of the generated neural network.

Further, the network 20 has a function of connecting the information processing apparatus 10 and the information processing server 30. The network 20 may include a public network such as the Internet, a telephone network and a satellite communication network, various kinds of local area networks (LAN) including Ethernet (registered trademark), a wide area network (WAN), or the like. Further, the network 20 may include a private network such as an internet protocol-virtual private network (IP-VPN)

The system configuration example according to the present disclosure has been described above. In the following description, using functional and constitutional features of the information processing apparatus 10 and the information processing server 30 according to the present disclosure, effects provided by the features will be described.

<<1.4. Information processing apparatus 10 according to present disclosure>>

The information processing apparatus 10 according to the present disclosure will be described in detail next. The information processing apparatus 10 according to the present disclosure has a function of accepting designation of a neural network by the user. Further, the information processing apparatus 10 has a function of controlling presentation of a Pareto optimal solution relating to the evaluated neural network. That is, the information processing apparatus 10 according to the present disclosure can present a Pareto optimal solution updated on the basis of the evaluation result of another neural network generated from the designated seed network, to the user.

Further, the information processing apparatus 10 has a function of accepting user operation and requesting the information processing server 30 to download a file relating to execution of a neural network. Here, the file relating to execution of a neural network may include a configuration file of a parameter, an XML file which defines a network, and a source code which executes ForwardProp by loading the above-described two files.

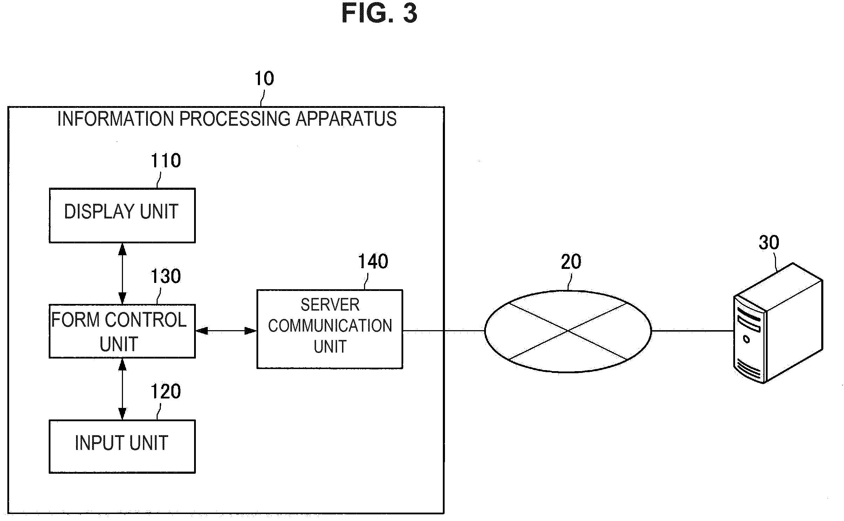

FIG. 3 is a functional block diagram of the information processing apparatus 10 according to the present disclosure. Referring to FIG. 3, the information processing apparatus 10 according to the present disclosure includes a display unit 110, an input unit 120, a form control unit 130 and a server communication unit 140. Each component provided at the information processing apparatus 10 will be described below.

(Display unit 110)

The display unit 110 has a function of displaying information controlled by each component of the information processing apparatus 10. In the present disclosure, the display unit 110 may particularly have a function of displaying a Pareto optimal solution relating to the evaluated neural network. The above-described function may be implemented by, for example, a cathode ray tube (CRT) display apparatus, a liquid crystal display (LCD) apparatus, and an organic light emitting diode (OLED) apparatus. Further, the display unit 110 may have a function as an input unit which accepts information input from the user. The function as the input unit can be implemented by, for example, a touch panel.

(Input unit 120)

The input unit 120 has a function of accepting information input from the user and handing over the input information to each component of the information processing apparatus 10. In the present disclosure, the input unit 120 may particularly have a function of accepting user operation of designating a seed network and handing over input information based on the operation to the form control unit 130 which will be described later. The above-described function may be, for example, realized with a keyboard and a mouse.

(Form control unit 130)

The form control unit 130 has a function of designating a seed network and controlling a form for presenting a Pareto optimal solution. Specifically, the form control unit 130 can designate a seed network and control display of a form on the basis of the input information acquired from the input unit 120.

Further, the form control unit 130 has a function of controlling display of a form to be displayed at the display unit 110 on the basis of information acquired from the information processing server 20 via the server communication unit 140 which will be described later. In the present disclosure, the form control unit 130 particularly has a function of controlling presentation of a Pareto optimal solution updated on the basis of the evaluation result of another neural network generated from the designated seed network. Further, the form control unit 130 has a function of requesting the information processing server 30 to download a file relating to execution of the designated neural network on the basis of the information acquired from the input unit 120.

(Server communication unit 140)

The server communication unit 140 has a function of performing information communication with the information processing server 30 via the network 20. Specifically, the server communication unit 140 transmits information relating to the above-described form to the information processing server 30 on the basis of control by the form control unit 130. Further, the server communication unit 140 hands over the information acquired from the information processing server 30 to the form control unit 130. In the present disclosure, the server communication unit 140 may particularly acquire information relating to the Pareto optimal solution from the information processing server 30 and hand over the information to the form control unit 130.

<<1.5. Information processing server 30 according to present disclosure>>

The information processing server 30 according to the present disclosure will be described in detail next. The information processing server 30 according to the present disclosure is an information processing apparatus which generates another neural network with a different network structure from an evaluated neural network. Further, the information processing server 30 has a function of acquiring an evaluation result of a generated neural network and updating a Pareto optimal solution relating to an evaluated neural network on the basis of the evaluation result. Still further, the information processing server 30 can generate another neural network with a different network structure from the neural network relating to the above-described Pareto optimal solution.

That is, the information processing server 30 according to the present disclosure can search for a more efficient network structure by repeating generation of a network and updating of a Pareto optimal solution.

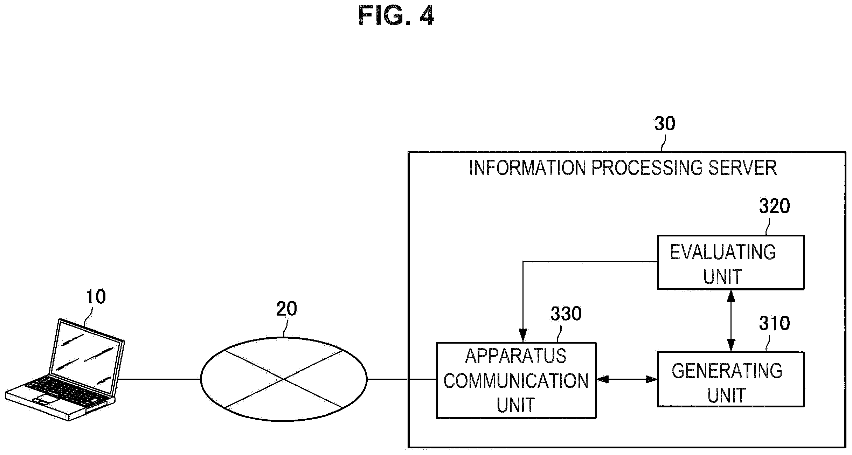

FIG. 4 is a functional block diagram of the information processing server 30 according to the present disclosure. Referring to FIG. 4, the information processing server 30 according to the present disclosure includes a generating unit 310, an evaluating unit 320 and an apparatus communication unit 330. Each component provided at the information processing server 30 will be described below.

(Generating unit 310)

The generating unit 310 has a function of generating another neural network with a different network structure from the original network. The generating unit 310 may generate another neural network with a different network structure from the seed network or a neural network relating to a Pareto optimal solution. The generating unit 310 can generate another neural network with a different network structure by, for example, genetic operation including the above-described mutation and crossover. Further, the generating unit 310 can generate another neural network with a different network structure using, for example, a neural network which changes a network structure of the input network.

(Evaluating unit 320)

The evaluating unit 320 has a function of acquiring an evaluation result of the generated neural network. The evaluating unit 320 may acquire the above-described evaluation result by, for example, causing a computing resource on cloud to execute the generated neural network. Further, the evaluating unit 320 may acquire the evaluation result by causing an emulator or various kinds of devices connected via the network 20 to execute the neural network.

Further, the evaluation result acquired by the evaluating unit 320 may include a calculation amount relating to the generated neural network and at least one of a training error and a validation error (hereinafter, the training error and the validation error may be collectively expressed as an error). The evaluating unit 320 can acquire the above-described calculation amount on the basis of a network structure of the generated neural network.

Further, the evaluating unit 320 has a function of updating a Pareto optimal solution relating to the evaluated neural network on the basis of the evaluation result of the generated neural network. That is, the evaluating unit 320 acquires the evaluation result of the neural network generated by the generating unit 310 and repeatedly executes updating of the Pareto optimal solution on the basis of the evaluation result. Details of updating of the Pareto optimal solution by the evaluating unit 320 will be described later.

(Apparatus communication unit 330)

The apparatus communication unit 330 has a function of performing information communication with the information processing apparatus 10 via the network 20. Specifically, the apparatus communication unit 330 transmits information relating to the neural network generated by the generating unit 310 and information relating to the Pareto optimal solution updated by the evaluating unit 320 to the information processing apparatus 10. Further, the apparatus communication unit 330 receives information of the seed network designated by the user and a request for downloading a file, from the information processing apparatus 10.

<2. First embodiment>

«2.1. Generation of neural network according to first embodiment»

Subsequently, generation of a neural network according to a first embodiment of the present disclosure will be described in detail. The information processing server 30 according to the present embodiment can acquire information of the seed network designated by the user from the information processing apparatus 10 and generate another neural network with a different network structure on the basis of the seed network. Further, the information processing server 30 according to the present embodiment can generate another neural network with a different network structure from a neural network relating to a Pareto optimal solution.

(Flow of generation of network)

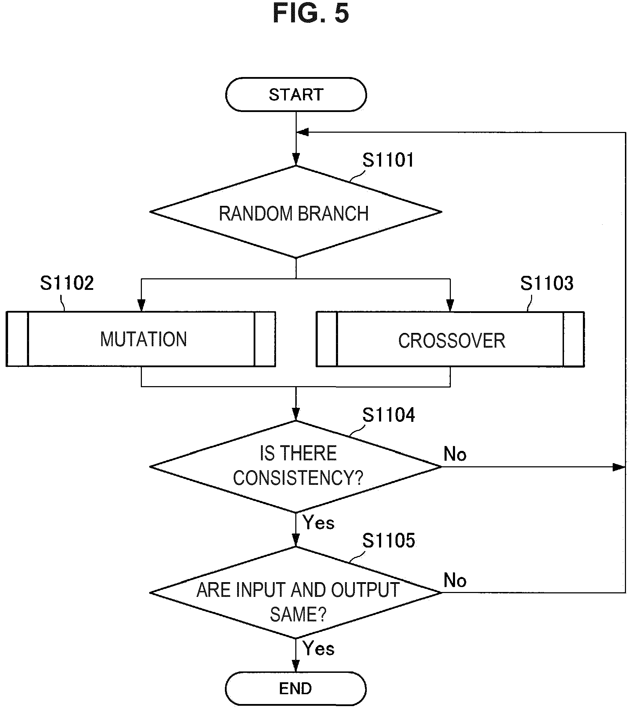

Generation of a neural network by the generating unit 310 of the information processing server 30 will be described below with reference to FIG. 5. FIG. 5 is a flowchart illustrating flow of generation of a neural network by the generating unit 310.
Referring to FIG. 5, first, the generating unit 310 randomly determines a generation method of another neural network to be applied to the original neural network (S1101). In this event, the original neural network may be the seed network designated by the user or may be a network randomly selected by the generating unit 310 from neural networks relating to Pareto optimal solutions updated by the evaluating unit 320.
The generating unit 310 then generates another neural network with a different network structure from the original neural network on the basis of the generation method selected in step S1101. Referring to an example illustrated in FIG. 5, the generating unit 310 according to the present embodiment may generate the above-described another neural network by causing the original neural network to mutate (S1102).
Further, the generating unit 310 may generate the above-described another neural network by crossing the original neural network (S1103). Detailed flow of mutation and crossover in step S1102 and step S1103 will be described later.
Subsequently, the generating unit 310 determines consistency of the neural network generated in step S1102 or step S1103 (S1104). In this event, the generating unit 310 may determine whether or not an error occurs in a layer configuration of the generated neural network. For example, in the case where input data is too small upon Max-Pooling processing, the generating unit 310 may determine that there is no consistency in the network. In this manner, in the case where it is determined that there is no consistency in the generated neural network (S1104: No), the generating unit 310 discards the generated neural network, and the processing returns to step S1101.
On the other hand, in the case where consistency is recognized in the generated neural network (S1104: Yes), the generating unit 310 subsequently determines whether or not input and output of the generated neural network and input and output of the original neural network are the same (S1105). Here, in the case where the input and output of the generated neural network is different from the input and output of the original neural network (S1105: No), because it is difficult to process an assumed recognition problem, the generating unit 310 discards the generated neural network, and the processing returns to step S1101. On the other hand, in the case where the input and output of the generated neural network and the input and output of the original neural network are the same (S1105: Yes), the generating unit 310 finishes the processing relating to generation of a network in a normal way.
Generation of a neural network according to the present embodiment has been described above. As described above, the generating unit 310 according to the present embodiment can generate another neural network with a different network structure from the seed network or a network relating to a Pareto optimal solution. Note that, while, in FIG. 5, a case has been described as an example where the generating unit 310 generates another neural network by genetic operation using mutation or crossover, generation of a network according to the present embodiment is not limited to such an example. The generating unit 310 according to the present embodiment may generate the above-described another neural network using a neural network which changes a network structure of the input neural network. Various methods may be applied to generation of a neural network by the generating unit 310.

(Flow of generation of network by mutation)

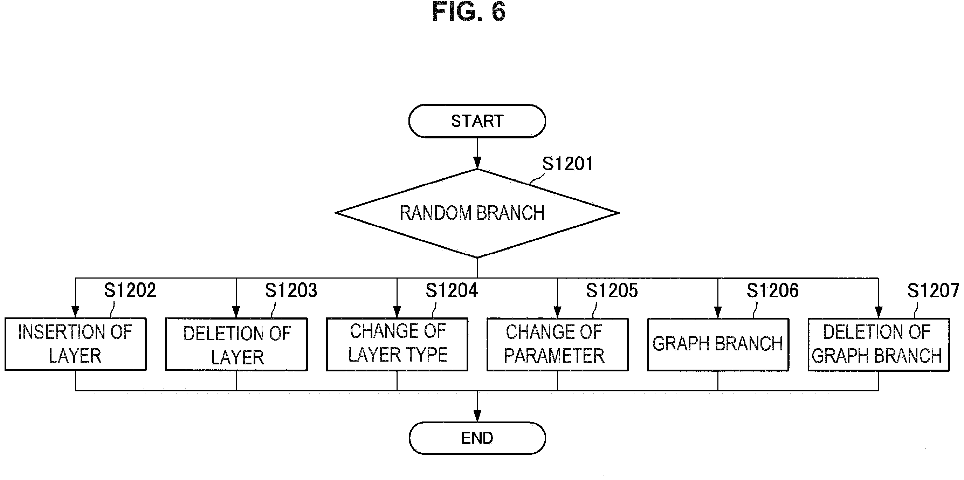

Subsequently, flow of generation of a network by mutation according to the present embodiment will be described. FIG. 6 is a flowchart for explaining generation of a network using mutation by the generating unit 310. That is, the flowchart illustrated in FIG. 6 illustrates detailed control of the generating unit 310 in step S1102 illustrated in FIG. 5. Referring to FIG. 6, mutation according to the present embodiment may include insertion of a layer, deletion of a layer, change of a layer type, change of a parameter, a graph branch and deletion of a graph branch.
Referring to FIG. 6, first, the generating unit 310 randomly determines a method of mutation to be applied to the original neural network (S1201). Subsequently, the generating unit 310 changes a network structure of the original neural network on the basis of the method selected in step S1201.

The generating unit 310 may perform processing of inserting a new layer (S1202). The generating unit 310 can generate another neural network with a different network structure, for example, by newly inserting an activating function such as Relu to the original neural network.

Further, the generating unit 310 may perform processing of deleting an existing layer (S1203). The generating unit 310 can generate another neural network with a different network structure, for example, by deleting a layer relating to Max-Pooling from the original neural network.

Further, the generating unit 310 may perform processing of changing a layer type of an existing layer (S1204). The generating unit 310 can generate another neural network with a different network structure, for example, by substituting another activating function for an activating function existing in the original neural network.

Further, the generating unit 310 may perform processing of changing a parameter relating to an existing layer (S1205). The generating unit 310 can generate another neural network with a different network structure, for example, by changing a kernel shape of an existing Convolution layer.

Further, the generating unit 310 may perform processing of creating a new graph branch (S1206). The generating unit 310 can generate another neural network, for example, by creating a graph branch by copying part of the existing layer and inserting a Concatenate layer as a coupling portion of the graph branch.

Further, the generating unit 310 may perform processing of deleting an existing graph branch (S1207). The generating unit 310 can generate another neural network, for example, by deleting one route of the existing graph branch and also deleting a Concatenate layer in the case where a branch disappears by the deletion.

Generation of a network using mutation by the generating unit 310 according to the present embodiment has been described above. Note that, while, in the above description, a case has been described as an example where the generating unit 310 executes the randomly selected processing in step S1202 to S1207, control of mutation according to the present embodiment is not limited to such an example. The generating unit 310 may perform two or more types of processing relating to step S1202 to S1207 at the same time or may separately perform execution and judgment in step S1202 to S1207. Further, the generating unit 310 may execute processing other than the processing illustrated in the example in FIG. 6. Control of mutation by the generating unit 310 can be flexibly changed.

(Flow of generation of network by crossover)

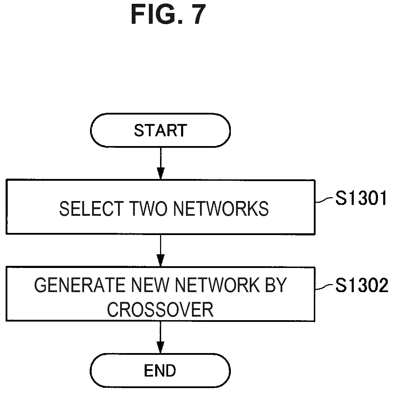

Subsequently, flow of generation of a network by crossover according to the present embodiment will be described. FIG. 7 is a flowchart for explaining generation of a network using crossover by the generating unit 310. That is, the flowchart illustrated in FIG. 7 illustrates detailed control of the generating unit 310 in step S1103 illustrated in FIG. 5.

Referring to FIG. 7, first, the generating unit 310 selects two original networks for executing crossover (S1301). Here, the generating unit 310 may acquire information of two seed networks designated by the user from the information processing apparatus 10 and select the two seed networks. Further, the generating unit 310 can also select one seed network designated by the user and a network for crossover registered in advance. Still further, the generating unit 310 may select another neural network generated by mutation from the seed network designated by the user.

Subsequently, the generating unit 310 crosses the two networks selected in step S1301 to generate another neural network with a different network structure (S1302). In this event, the generating unit 310 may execute crossover using various methods. The generating unit 310 can generate the above-described another neural network, for example, by single-point crossover, two-point crossover, multipoint crossover, uniform crossover, or the like.

Generation of a neural network according to the present embodiment has been described above. As described above, the generating unit 310 according to the present embodiment can generate another neural network with a different network structure from the original neural network by genetic operation including mutation and crossover, or the like. That is, with the information processing method according to the present embodiment, it becomes possible to search for a more efficient network structure by repeating updating of a Pareto optimal solution on the basis of the evaluation result of the neural network generated by the generating unit 310.

<<2.2. Search of network structure by updating Pareto optimal solution>>

Search of a network structure by updating a Pareto optimal solution according to the present embodiment will be described in detail next. The evaluating unit 320 according to the present embodiment can acquire an evaluation result of the neural network generated by the generating unit 310 and update a Pareto optimal solution relating to the evaluated neural network on the basis of the evaluation result. That is, with the information processing method according to the present embodiment, a network which makes one of a calculation amount and an error smaller is updated as a Pareto optimal solution.

(Visualization of search process)

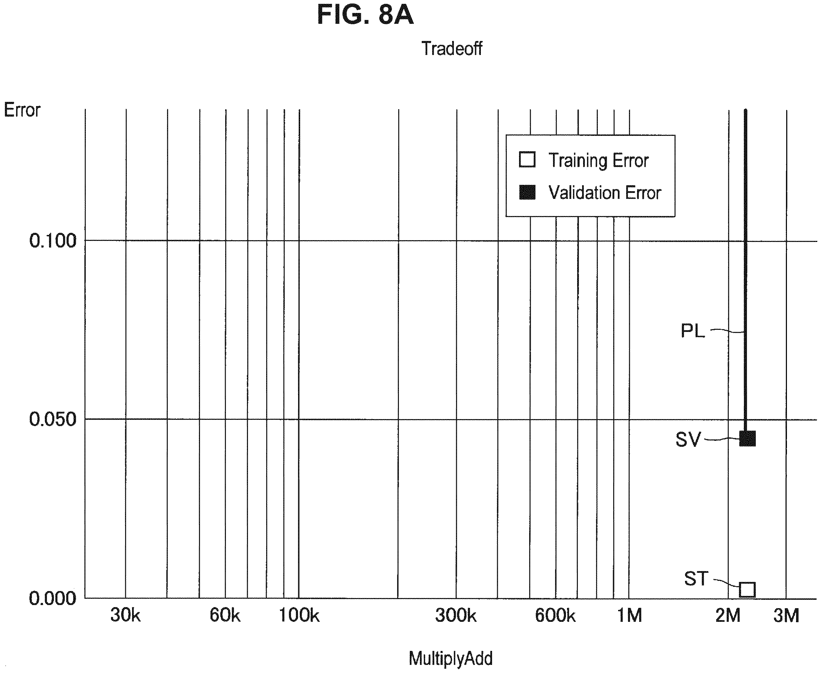

Here, search process of a network structure according to the present embodiment will be described using examples with reference to FIG. 8A to FIG. 8C. FIG. 8A to FIG. 8C are diagrams illustrating updating of a Pareto optimal solution by the evaluating unit 320 in a stepwise manner. The information illustrated in FIG. 8A to FIG. 8C may be trade-off information based on the evaluation result of the neural network, displayed at the display unit 110 of the information processing apparatus 10. That is, with the information processing method according to the present embodiment, it is possible to visualize search process of a network structure and present the information to the user in real time.

Note that, in FIG. 8A to FIG. 8C, a case will be described as an example where trade-off information relating to a calculation amount of an objective function and an error rate is presented. Therefore, FIG. 8A to FIG. 8C indicate an error rate on a vertical axis and indicate a calculation amount of an objective function on a horizontal axis. Further, in FIG. 8A to FIG. 8C, the number of times of multiply add is employed as an example relating to the calculation amount of the objective function.

FIG. 8A is a diagram illustrating trade-off information in a stage where a seed network is designated. Referring to FIG. 8A, in the trade-off information in the present stage, a validation error SV of the evaluated seed network and a training error ST are displayed. Further, in the trade-off information, a boundary PL of the Pareto optimal solution is indicated. In the present stage, because only the seed network is the evaluated network, a Pareto optimal solution PL is displayed with a line, and only a validation error SV of the seed network is displayed on the boundary PL of the Pareto optimal solution.

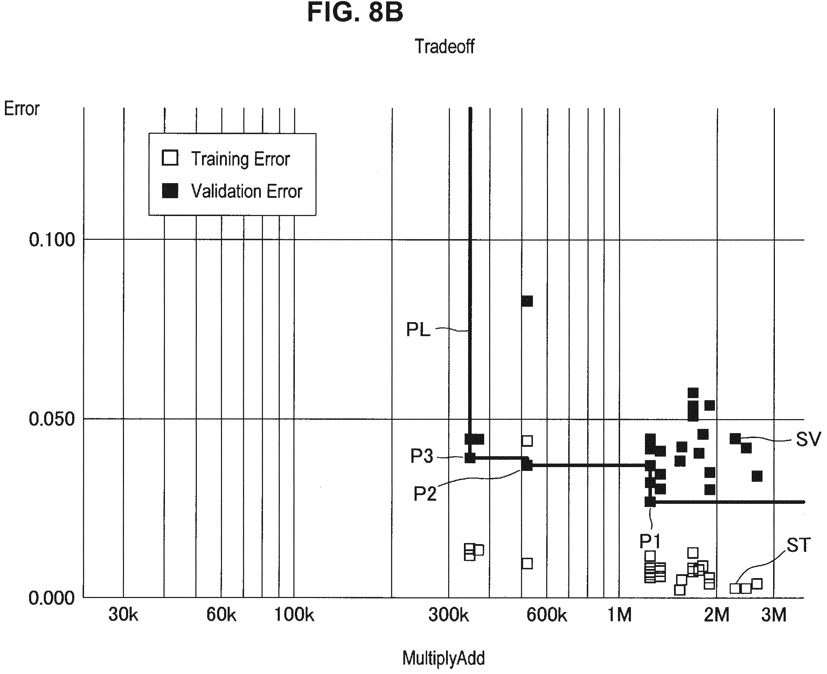

FIG. 8B is a diagram illustrating trade-off information in a stage of halfway of search. Referring to FIG. 8B, in the trade-off information in the present stage, error information relating to a plurality of networks are indicated as well as the validation error SV of the seed network, and the training error ST. That is, FIG. 8B illustrates the trade-off information in the case where generation of a network by the generating unit 310 and updating of a Pareto optimal solution by the evaluating unit 320 are repeated a plurality of times.

Therefore, the boundary PL of the Pareto optimal solution illustrated in FIG. 8B is updated on the basis of the evaluation result of the neural network generated by the generating unit 310. In the example illustrated in FIG. 8B, validation errors P1 to P3 of neural networks relating to new Pareto optimal solutions are displayed on the boundary PL of the Pareto optimal solution.

In this manner, the evaluating unit 320 can acquire an evaluation result of the generated neural network and update the Pareto optimal solution on the basis of the evaluation result. Further, the generating unit 310 may generate another network on the basis of the neural network randomly selected from the neural networks P1 to P3 relating to the Pareto optimal solutions updated by the evaluating unit 320. That is, with the information processing method according to the present embodiment, another neural network is generated from a neural network relating to a Pareto optimal solution, and updating of the Pareto optimal solution based on the evaluation of the other neural network is repeatedly executed.

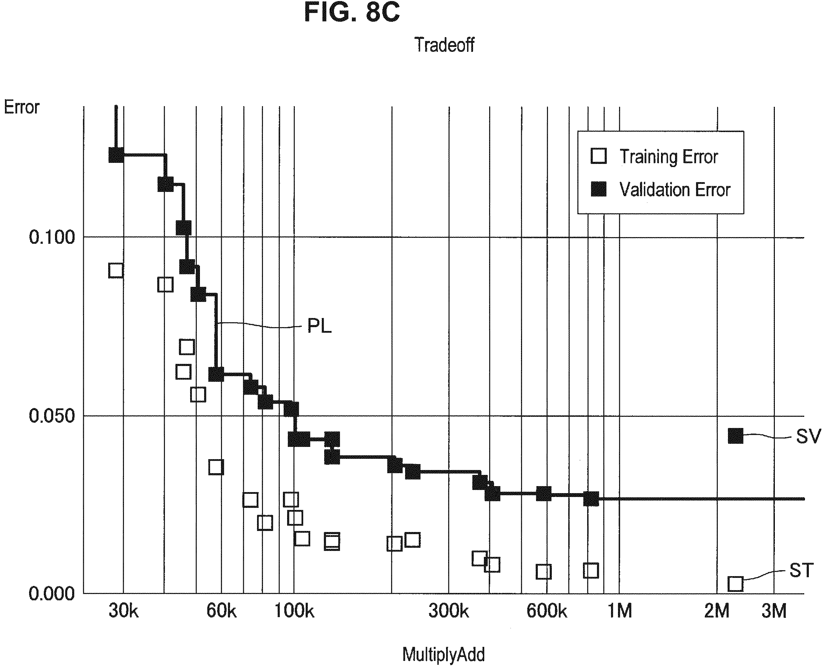

FIG. 8C is a diagram illustrating trade-off information in a stage where search of a network structure is finished. As illustrated in FIG. 8C, in the trade-off information in the present stage, only error information of the neural network relating to the seed network and the Pareto optimal solution may be displayed. Referring to FIG. 8C, it can be seen that the boundary PL of the Pareto optimal solution in the present stage is largely updated from the states illustrated in FIG. 8A and FIG. 8C.

Visualization of search process according to the present embodiment has been described above. As described above, with the information processing method according to the present embodiment, it is possible to search for a more efficient network structure by repeating generation of a neural network and updating of a Pareto optimal solution. Further, with the information processing method according to the present embodiment, it is possible to visualize search process of a network structure and present the information to the user in real time. The user can make various judgements in accordance with progress of search by confirming the search process in real time.

Note that, while, in the above description, a case has been described as an example where trade-off information relating to an error and a calculation amount is presented to the user, the trade-off information according to the present embodiment is not limited to such an example. In the trade-off information according to the present embodiment, for example, memory usage, an amount of heat generation, power consumption, or the like, relating to hardware may be used as well as the calculation amount. Further, in the trade-off information, total cost of hardware calculated from the calculation amount, total service cost, or the like, including server cost, or the like, may be used. Still further, switching of the above-described items may be realized by user selection. The evaluating unit 320 can calculate the above-described values on the basis of information relating to hardware and service, which is stored in advance.

(Example of presentation of search result)

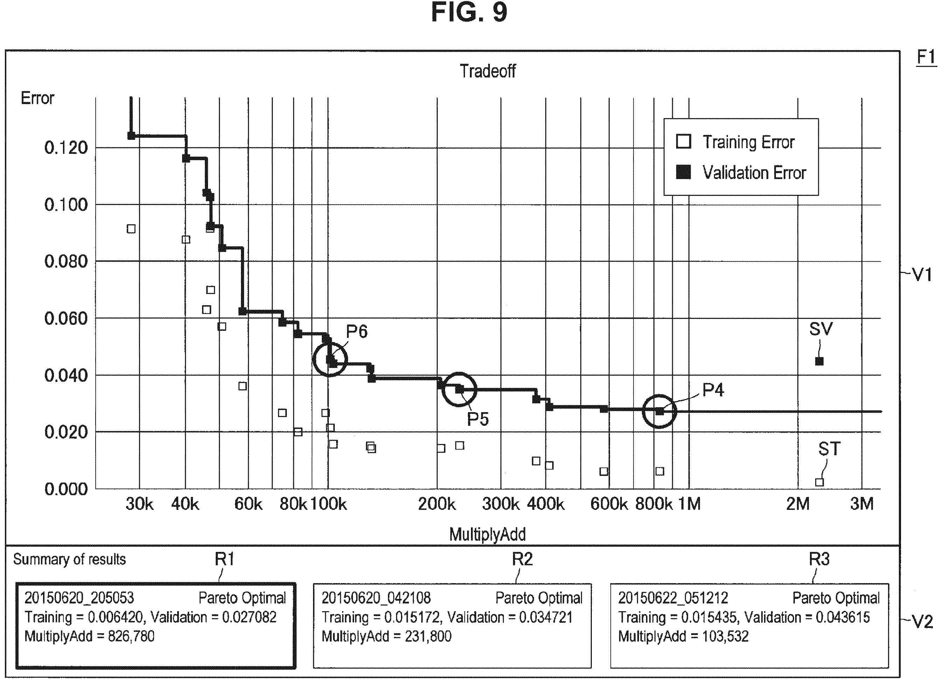

Visualization of the search process according to the present embodiment has been described above. Subsequently, a presentation example of a search result according to the present embodiment will be described in detail. FIG. 9 is a diagram illustrating a configuration example of a form to be presented to the user when search of a network structure is finished.

Referring to FIG. 9, a form F1 in which a search result is displayed includes a region V1 for displaying a Pareto optimal solution and a region V2 for displaying outline of the evaluation result. Here, referring to region VI, in an example illustrated in FIG. 9, it can be seen that neural networks P4 to P6 relating to three Pareto optimal solutions are highlighted in addition to a state of the Pareto optimal solutions illustrated in FIG. 8C.

Here, the neural networks P4 to P6 may be respectively a network relating to maximum performance, a network relating to an intermediate solution and a network relating to a minimum calculation amount. In this event, the neural network P4 may be a network with the least error among the found networks. Further, the neural network P5 may be a network which is excellent in balance between an error and a calculation amount among the found networks. Note that definition of the intermediate solution may be designed as appropriate in accordance with conditions. Further, the neural network P6 may be a network in which errors are equal to or less than that in the seed network and which has the smallest calculation amount among the found networks. In this manner, with the information processing method according to the present embodiment, it is possible to select a candidate which satisfies the conditions from the found networks and present the candidate to the user.

Further, in the region V2, evaluation outline R1 to R3 of the networks P4 to P6 relating to the maximum performance, the intermediate solution and the minimum calculation amount described above may be displayed. Referring to FIG. 9, the evaluation outline R1 to R3 include information of date and time of execution, a training error, a validation error and a calculation amount. The user can understand outline of the learning result by confirming the above-described information indicated in the evaluation outline R1 to R3.

Further, while not illustrated, the user may be able to cause details of the corresponding neural network to be displayed by selecting the evaluation outline R1 to R3. The user can confirm the corresponding network structure, a more detailed learning curve, or the like, for example, by clicking the evaluation outline R1 to R3. Further, in this event, the form control unit 130 of the information processing apparatus 10 may perform control so that, for example, the evaluation outline R1 of the neural network relating to maximum performance is selected by default.

Further, the user may be able to download a file relating to execution of the corresponding neural network by operating the evaluation outline R1 to R3. Here, the file to be downloaded may include a configuration file of a parameter, an XML file which defines a network, a source code which executes ForwardProp (prediction and identification) by loading the above-described two files, or the like.

The presentation example of a search result according to the present embodiment has been described above. As described above, with the information processing method according to the present embodiment, it is possible to present a candidate selected from the neural networks relating to the Pareto optimal solutions to the user. Here, the above-described candidate may include a network relating to maximum performance, a network relating to an intermediate solution and a network relating to a minimum calculation amount. Further, with the information processing method according to the present embodiment, it is possible to allow the user to download a file relating to execution of a network. By this means, the user can easily select a network which satisfies conditions and acquire a file relating to execution of the network.

Note that, while, in the above description, a case has been described as an example where a network relating to maximum performance, a network relating to an intermediate solution and a network relating to a minimum calculation amount are presented, presentation of a search result according to the present embodiment is not limited to such an example. Presentation of a search result according to the present embodiment may be performed, for example, on the basis of specifications of hardware designated by the user in advance. The evaluating unit 320 can, for example, take into account a calculation amount which can be mounted on hardware. That is, the evaluating unit 320 may select a network for which a calculation amount falls below the above-described calculation amount and with the least error, to the user. Presentation of a search result according to the present embodiment can be changed as appropriate in accordance with requirements.

<<2.3. Effect of search according to present embodiment>>

Search of a network structure according to the present embodiment has been described above. Subsequently, an effect of search according to the present embodiment will be described.

(Detection of new network structure)

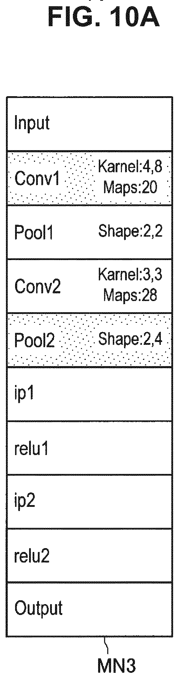

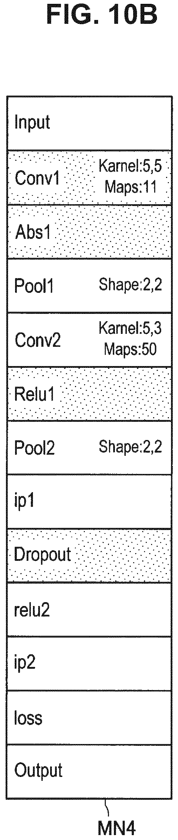

FIG. 10A and FIG. 10B are diagrams illustrating a configuration example of a network structure found on the basis of the seed network SN illustrated in FIG. 1. Referring to FIG. 10A, it can be seen that, in the neural network MN3 after search, the number of parameters relating to "Conv1" and "Pool2" changes compared to that in the seed network SN.

Specifically, in the neural network MN3 after search, a kernel shape relating to "Conv1" is changed from 5 (vertical) × 5 (horizontal) of the seed network SN to 4 (vertical) × 8 (horizontal). Further, in the neural network MN3 after search, a pool shape relating to "Pool2" is changed from 2 (vertical) × 2 (horizontal) of the seed network SN to 2 (vertical) × 4 (horizontal).

As described above, with the information processing method according to the present embodiment, it is possible to detect an anisotropic parameter which is difficult to be reached through manual search. Because there are an infinite number of patterns for each layer in the anisotropic parameter as illustrated in FIG. 10A, it is difficult for the user to set different values and perform search. Meanwhile, with the information processing method according to the present embodiment, because search is performed while a parameter is randomly changed, it is possible to improve a possibility that an anisotropic parameter as described above can be detected.

Further, referring to FIG. 10B, it can be seen that, in a neural network MN4 after search, activating functions "Abs1" and "Relu1" which are different from each other are respectively inserted after "Conv1" and "Conv2", Further, in the neural network MN4 after search, "Dropout" is newly inserted in a network structure. Further, while not illustrated, in "Conv1" in the neural network MN4 after search, a stride parameter is changed to 1 (vertical) × 2 (horizontal).

As described above, with the information processing method according to the present embodiment, it is possible to newly detect arrangement of components suitable for a layer configuration without repeatedly using the same activating function. That is, the information processing method according to the present embodiment has an effect of detecting a new network structure different from a network structure which is liable to be set by the user by randomly changing the network structure.

(Evaluation result according to present embodiment)

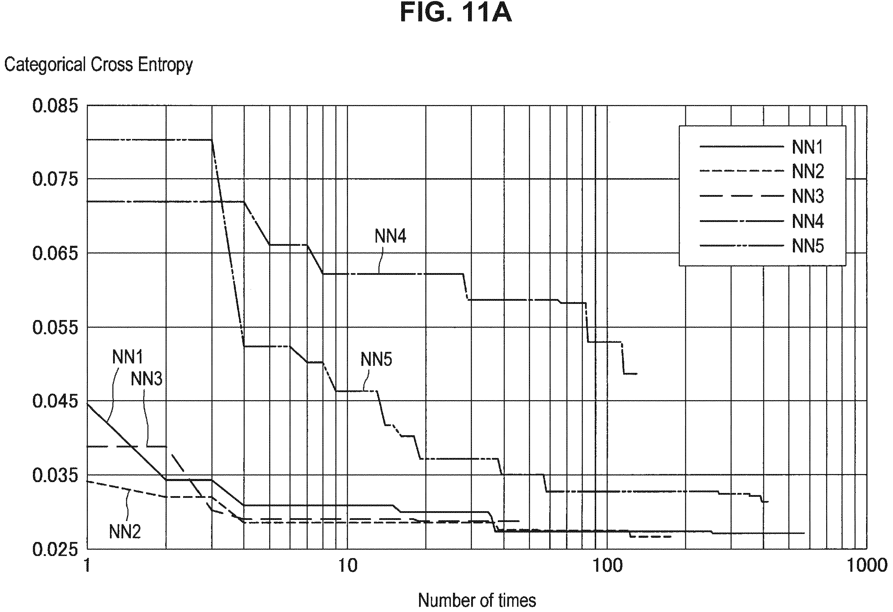

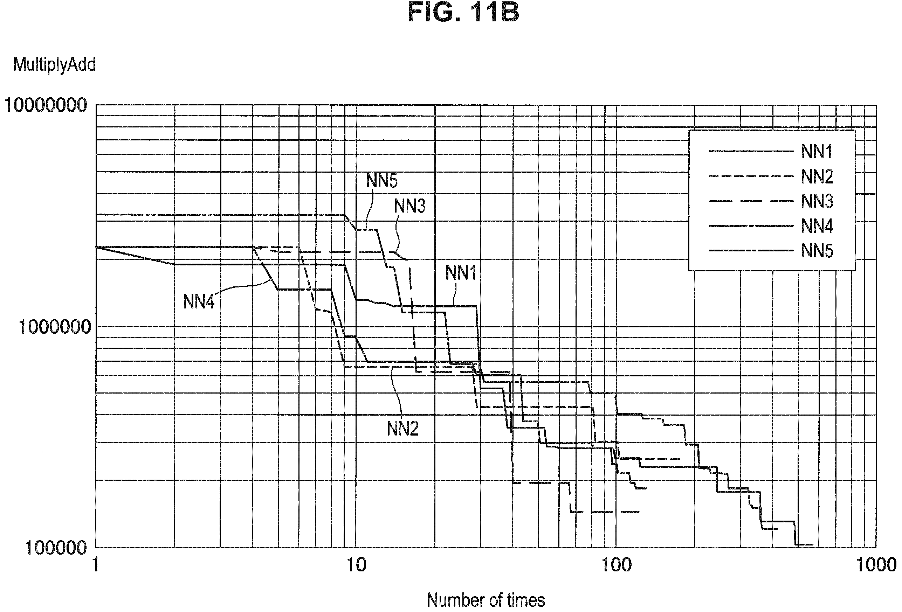

Subsequently, an evaluation result of the information processing method according to the present embodiment will be described. FIG. 11A and FIG. 11B are graphs indicating the evaluation results of the information processing method according to the present embodiment using a handwritten number recognition data set MNIST.

Here, the evaluation results illustrated in FIG. 11A and FIG. 11B are data obtained with 60,000 pieces of learning data, 10,000 pieces of evaluation data, 28 × 28 input nodes and 10 (0 to 9) output nodes. Further, in the evaluation results illustrated in FIG. 11A and FIG. 11B, five seed networks NN1 to NN5 having network structures different from each other are evaluated.

FIG. 11A illustrates relationship between an evaluation data error (Categorical Cross Entropy) and the number of times of trial of search. FIG. 11A indicates an evaluation data error on a vertical axis and the number of times of trial of search on a horizontal axis. Referring to FIG. 11A, it can be seen that the evaluation data error decreases along with the number of times of trial of search in all of the seed networks NN1 to NN5. For example, in the seed network NN1, while the evaluation data error before search is started is 0.044, the evaluation data error after search is finished is 0.027. In this manner, according to the information processing method according to the present embodiment, it is possible to search for a more accurate network structure on the basis of the seed network.

Further, FIG. 11B illustrates relationship between the number of times of multiply add and the number of times of trial of search. FIG. 11B indicates the number of times of multiply add on a vertical axis and the number of times of trial of search on a horizontal axis. Referring to FIG. 11B, it can be seen that the number of times of multiply add decreases along with the number of times of trial of search in all of the seed networks NN1 to NN5. For example, in the seed network NN1, while the number of times of multiply add before search is started is 2.3M, the number of times of multiply add after search is finished is 103K. In this manner, according to the information processing method according to the present embodiment, it is possible to search for a network structure for which a calculation amount is suppressed to a smaller amount on the basis of the seed network.

The evaluation result of the information processing method according to the present embodiment has been described above. As described above, according to the information processing method according to the present embodiment, it is possible to detect a more accurate and lighter network on the basis of the seed network. That is, the information processing method according to the present embodiment has an effect of automatically detecting a network structure in which execution speed is considerably improved without performance being degraded.

<3. Second embodiment>

«3.1. Measurement of prediction error according to present embodiment»

The information processing method according to the first embodiment of the present disclosure has been described above. Subsequently, an information processing method according to a second embodiment of the present disclosure will be described in detail. One feature of the information processing method according to the second embodiment of the present disclosure is that a prediction error of the generated neural network is measured, and an evaluation result of the neural network selected on the basis of the prediction error is acquired. That is, with the information processing method according to the present embodiment, it is possible to compare an evaluation result of another neural network acquired on the basis of advance error prediction with an evaluation result of the evaluated neural network. The above-described prediction error may include a value relating to at least one of a predicted training error and a predicted validation error. That is, with the information processing method according to the present embodiment, it is possible to improve search efficiency by selectively evaluating a network for which an error is expected to be the smallest among the generated neural networks.

Note that, in the following description, a difference with the first embodiment will be mainly described, and description of functions of the information processing apparatus 10 and the information processing server 30 which are common to the embodiments will be omitted.

(Selection of evaluation target on the basis of prediction error)

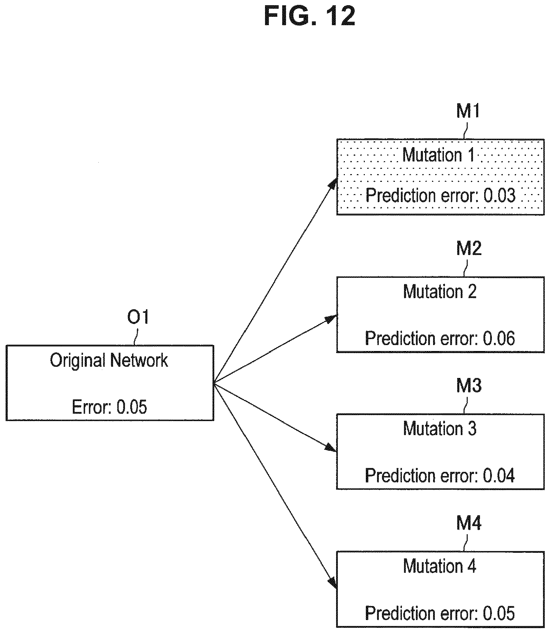

As described above, with the information processing method according to the present embodiment, it is possible to measure a prediction error of the generated neural network and selectively evaluate a network for which an error is expected to be the smallest. FIG. 12 is a conceptual diagram for explaining selection of an evaluation target according to the present embodiment.

Referring to FIG. 12, in the information processing method according to the present embodiment, a plurality of another neural networks M1 to M4 are generated on the basis of an original neural network 01. That is, the generating unit 310 generates a plurality of neural networks from the seed network or a network relating to a Pareto optimal solution. In this event, the original neural network does not always have to be a single network. That is, the generating unit 310 may generate a plurality of another neural networks from a plurality of original networks.

The evaluating unit 320 according to the present embodiment then measures prediction errors of the plurality of neural networks generated by the generating unit 310. In an example illustrated in FIG. 12, the evaluating unit 320 measures each of the prediction errors of the neural networks M1 to M4. In this event, the evaluating unit 320 may measure the prediction errors on the basis of feature amounts of network structures relating to the generated neural networks. Measurement of prediction errors by the evaluating unit 320 will be described in detail later.

Subsequently, the evaluating unit 320 selects a network for which an error is expected to be the smallest as the next evaluation target among the neural networks for which prediction errors are measured. An example illustrated in FIG. 12 illustrates a case where the evaluating unit 320 selects a neural network M1 with the smallest prediction error.

As described above, with the information processing method according to the present embodiment, it is possible to selectively evaluate a neural network for which an error is expected to be the smallest among the plurality of generated neural networks. By this means, with the information processing method according to the present embodiment, an effect of improving efficiency of search compared to the first embodiment in which evaluation of a single generated network is repeated can be expected. Note that, while, in the example in FIG. 12, a case has been illustrated where four neural networks are generated from the original network, the number of networks generated by the generating unit 310 may be equal to or larger than 1100 or equal to or larger than 1000.

(Measurement of prediction error through Gaussian process)

Subsequently, measurement of a prediction error utilizing Gaussian process according to the present embodiment will be described. As described above, with the information processing method according to the present embodiment, it is possible to measure a prediction error of the generated neural network. In this event, the evaluating unit 320 may measure a prediction error by converting the network structure into a feature vector and restoring an error from the feature vector. That is, the evaluating unit 320 according to the present embodiment can measure a prediction error through Gaussian process which is defined from a feature vector of the evaluated network and an error.

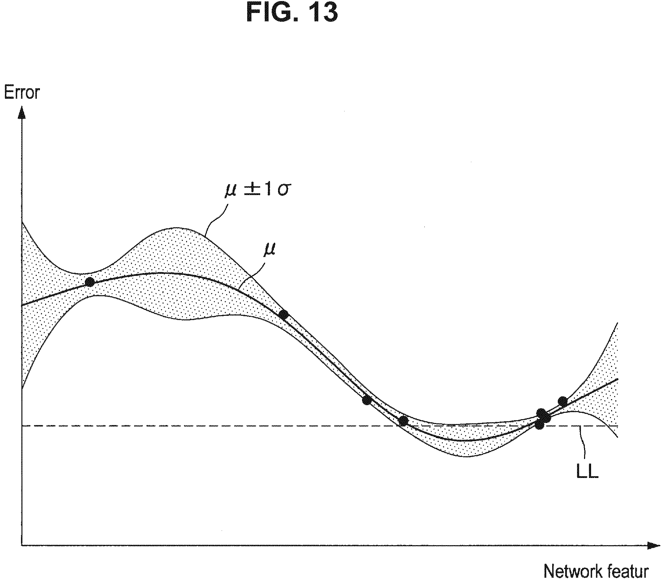

FIG. 13 is a conceptual diagram of Gaussian process according to the present embodiment. An example illustrated in FIG. 13 indicates an error on a vertical axis and a feature vector of a network on a horizontal axis, and each point indicates an evaluated network structure. Further, in FIG. 13, a curve indicates an average $\mu$ of the prediction errors predicted by a Gaussian random field, and a region highlighted through hatching indicates a variance $\mu \pm \sigma 1$ of the prediction errors. In this manner, with the information processing method according to the present embodiment, it is possible to measure a prediction error of the generated network through Gaussian process. Further, in FIG. 13, a line LL is a line indicating a minimum error relating to the evaluated network, and the evaluating unit 320 may select a network structure in which a probability that the line LL is updated is the highest as the next evaluation target. Note that, because the diagram illustrated in FIG. 13 is a conceptual diagram, the diagram is expressed in one dimension.

As described above, with the information processing method according to the present embodiment, it is possible to measure a prediction error of a neural network using Gaussian process. Here, the above-described prediction error may include an average and a variance of the predicted errors. The evaluating unit 320 can select a network to be evaluated on the basis of an average and a variance of the predicted errors and a calculation amount and acquire an evaluation result.

(Selection of evaluation target based on distribution of prediction errors)

Measurement of a prediction error through Gaussian process according to the present embodiment has been described above. As described above, the evaluating unit 320 according to the present embodiment may select a network to be evaluated on the basis of an average and a variance of the predicted errors and a calculation amount. In this event, the evaluating unit 320 can determine an evaluation target on the basis of distribution of the prediction errors and a calculation amount. The evaluating unit 320 may select a neural network to be evaluated, for example, on the basis of an expected value of an area in which the boundary relating to the Pareto optimal solution is updated. Specifically, the evaluating unit 320 can obtain the above-described expected value through integration from the average and the variance of the prediction errors of the generated networks and select a network for which the expected value becomes the largest. By this means, with the information processing method according to the present embodiment, it is possible to efficiently search for a network with less errors and with a smaller calculation amount.

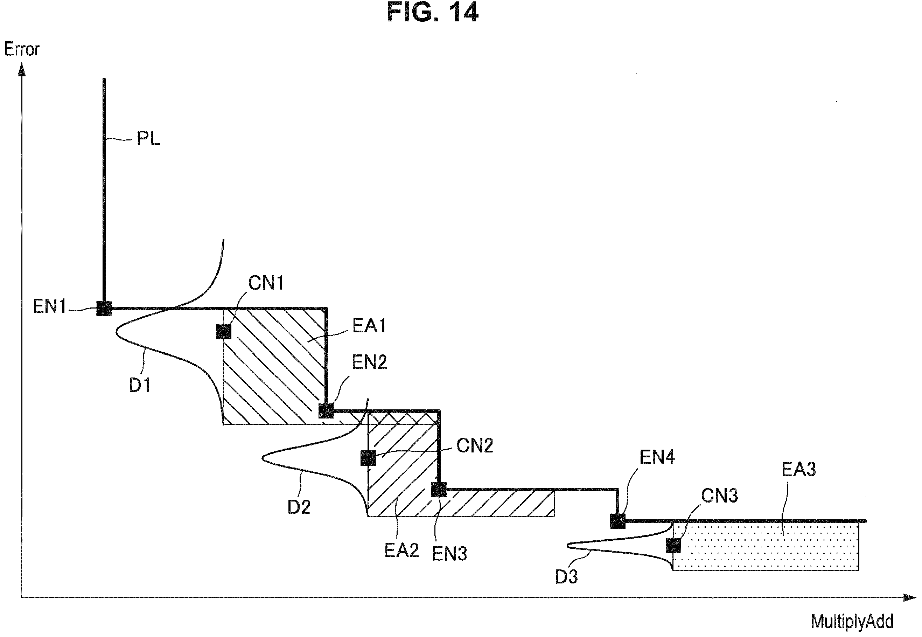

FIG. 14 is a conceptual diagram for explaining the expected value of the area in which the boundary relating to the Pareto optimal solution is updated. FIG. 14 indicates an error on a vertical axis and the number of times of multiply add on a horizontal axis. Further, FIG. 14 illustrates the boundary PL of the Pareto optimal solution configured with the evaluated networks EN1 to EN4.

Further, FIG. 14 illustrates prediction errors of networks CN1 to CN3 generated by the generating unit 310 and D1 to D3 which indicate distribution of the respective prediction errors relating to the networks CN1 to CN3. Here, the distribution D1 to D3 may be data obtained from the average and the variance of the prediction errors.

The evaluating unit 320 according to the present embodiment can obtain the expected value of the area in which the boundary PL is updated on the basis of the distribution D1 to D3. Areas EA1 to EA3 illustrated in FIG. 14 are expected values of the areas calculated from the respective distribution D1 to D3 relating to the networks CN1 to CN3. In this manner, the evaluating unit 320 according to the present embodiment can calculate the expected value of the area in which the boundary relating to the Pareto optimal solution is updated and select a network in which the expected value of the area becomes the largest as the next evaluation target. Note that, in this event, because there is a possibility that areas relating to a calculation amount direction may be infinitely updated for the areas EA1 to EA3, the evaluating unit 320 may set a maximum value to calculate respective expected values for the areas relating to the calculation amount direction.

Measurement of a prediction error according to the present embodiment and selection of an evaluation target based on the prediction error have been described above. As described above, with the information processing method according to the present embodiment, it is possible to measure a prediction error on the basis of a network structure of the generated network. Further, with the information processing method according to the present embodiment, it is possible to improve search efficiency by selectively evaluating a network for which an error is expected to be the smallest.

Note that, while, in the above description, measurement of a prediction error using Gaussian process has been described as an example, measurement of a prediction error according to the present embodiment is not limited to such an example. The prediction error according to the present embodiment may be, for example, measured using a neural network which recognizes a network structure of the input neural network. It is possible to apply various machine learning methods to assumption of the prediction error according to the present embodiment.

<<3.2. Calculation of feature vector relating to network structure>>

Calculation of a feature vector according to the present embodiment will be described in detail next. As described above, with the information processing method according to the present embodiment, it is possible to calculate a feature vector of a network structure on the basis of the network structure of the generated network. In this event, the evaluating unit 320 may calculate a feature vector using the following equation (1).
[Math. 1]

$$feature = net2vec(network) \qquad \cdot \cdot \cdot \ (1)$$

$$error = f(feature) \qquad \cdot \cdot \cdot \ (2)$$

Here, net2vec in equation (1) may be a function for calculating a feature vector on the basis of a network structure. With the information processing method according to the present embodiment, it is possible to calculate a prediction error of a network by applying the feature vector calculated by equation (1) to the above-described equation (2). As described above, the function f in equation (2) may be defined through Gaussian process.

(Calculation of feature vector by net2vec)

Subsequently, net2vec according to the present embodiment will be described in detail. With net2vec according to the present embodiment, it is possible to calculate a feature vector on the basis of an appearance frequency of a layer, a histogram relating to appearance positions of layers, the number of branches for each appearance position, statistic of main parameters for each appearance positon.

Here, the appearance frequency of a layer may be obtained by n-gram. In this event, the evaluating unit 320 can calculate an appearance frequency relating to each layer and combination of layers using uni-gram and bi-gram. Note that, in the case where there is a graph branch in a network structure, the evaluating unit 320 may obtain an appearance frequency for each branch route.

Further, the histogram relating to the appearance positions of layers may be obtained on the basis of the number of respective layers at each appearance position. In this event, the evaluating unit 320 may, for example, calculate the above-described histogram by defining the appearance positions relating to a network structure as eight segments. Further, the number of branches for each appearance position may be an average value of the number of graph branches at each appearance position.

Further, the statistic of main parameters for each appearance position may be obtained on the basis of a maximum amount, a total value, an average value, or the like, of the respective parameters for each of the above-described appearance positons. The evaluating unit 320 may handle, for example, an output buffer size, the number of parameters (memory amount) included in a layer, the number of times of multiply add, or the like, as statistic of main parameters.

Further, the above-described main parameters may include an out shape of an Affine layer, a kernel shape or an output map of a locally connected layer (LCL) or a Convolution layer.

Further, the main parameters may include pool shapes relating to Max-Pooling and Sum-Pooling, a probability P relating to Dropout, or the like.

As described above, with net2vec according to the present embodiment, it is possible to calculate a feature vector of a network structure while taking into account various elements relating to the network structure. Note that, in net2vec according to the present embodiment, a feature vector may be calculated on the basis of elements other than the above-described examples. net2vec according to the present embodiment can be flexibly converted in accordance with specification of a neural network group to be evaluated.

(Evaluation result of ne2vec)

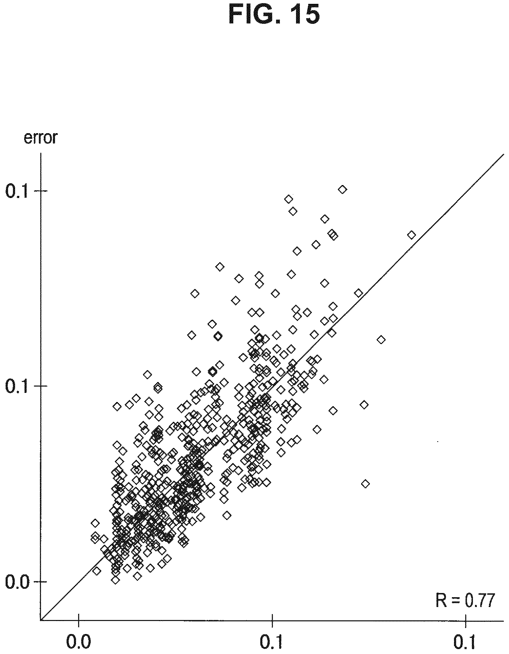

Subsequently, an evaluation result of net2vec according to the present embodiment will be described. FIG. 15 to FIG. 17 illustrate results of evaluation experiments obtained when search is performed using a MNIST data set in the information processing method according to the first embodiment. Note that the evaluation results illustrated in FIG. 15 to FIG. 17 are results obtained by processing previous 853 data.

FIG. 15 illustrates a result obtained by regressively learning relationship between a feature vector and an error and verifying validity of net2vec. FIG. 15 indicates an actual measurement error on a vertical axis and a prediction error calculated from a feature vector on a horizontal axis. Referring to FIG. 15, strong positive correlation (R = 0.77) is recognized between the prediction error calculated using net2vec and the actual measurement error. In this manner, with the information processing method according to the present embodiment, it is possible to realize accurate error prediction by calculating a feature vector of a network structure by net2vec.

Further, for example, in the evaluation result illustrated in FIG. 15, in the case where the prediction error exceeds 0.1, the actual measurement error tends to also increase. Therefore, in selection of an evaluation target by the evaluating unit 320, conditions that a network for which a prediction error exceeds 0.1 is excluded, or the like, may be provided. With the information processing method according to the present embodiment, it is possible to realize accurate search by modifying operation of the generating unit 310 and the evaluating unit 320 as appropriate on the basis of the obtained evaluation result.

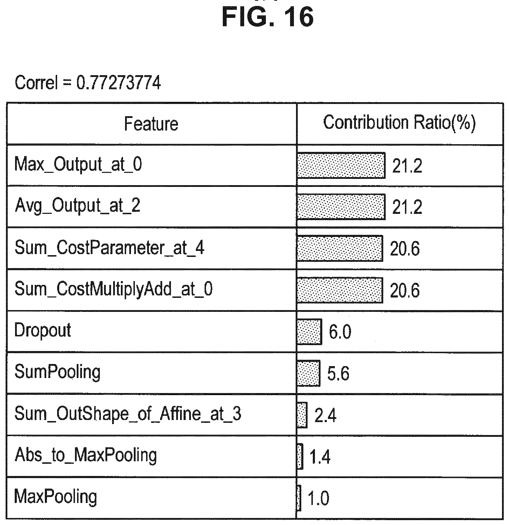

The evaluation result illustrated in FIG. 16 will be described next. FIG. 16 illustrates relationship between each feature in a network structure and a rate of contribution to learning accuracy relating to each feature. Note that, in FIG. 16, the number indicated with "at_n" is a value indicating an appearance position of a layer described above, and a smaller numerical value indicates that the appearance position is closer to an input layer.

Referring to FIG. 16, it can be seen that, for example, a maximum output size and an average output size of a layer at an appearance position close to the input layer largely affects learning accuracy. Further, it can be seen that, for example, learning accuracy tends to improve by inserting Dropout. As described above, with the information processing method according to the present embodiment, it is possible to specify a factor that affects performance of a neural network by analyzing a rate of contribution to learning accuracy of each feature in a network structure.

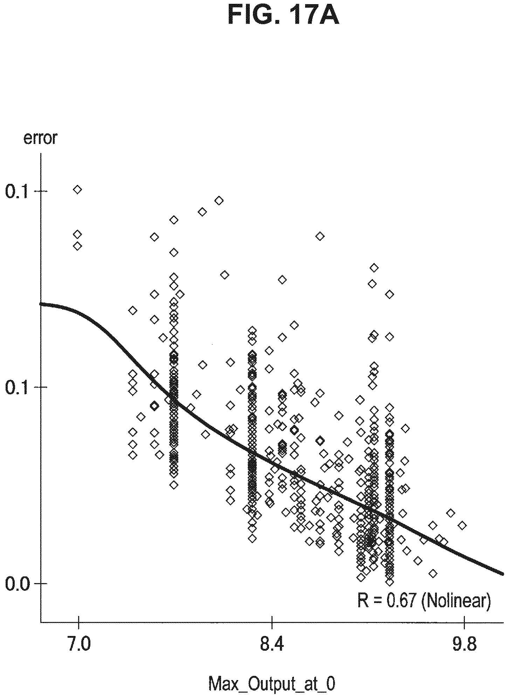

FIG. 17A to FIG. 17C are examples of a detailed evaluation result relating to the rate of contribution to learning accuracy illustrated in FIG. 16. Here, FIG. 17A is a graph indicating relationship between the maximum output size (appearance position = 0) and the actual measurement error. FIG. 17A indicates the actual measurement error on a vertical axis and the maximum output size at the appearance position of 0 on a horizontal axis. Referring to FIG. 17A, it can be recognized that the actual measurement error tends to be smaller as the maximum output size of the layer is larger.

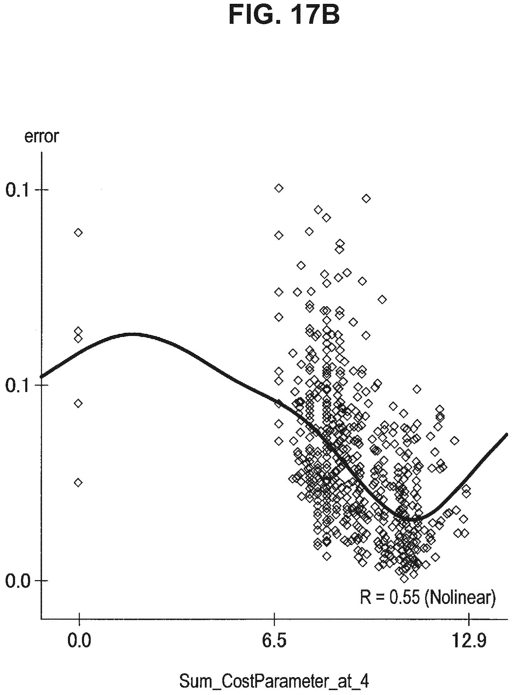

Further, FIG. 17B is a graph indicating relationship between the total number of parameters (appearance position = 4) and the actual measurement error. FIG. 17B indicates the actual measurement error on a vertical axis and the total number of parameters at the appearance position of 4 on a horizontal axis. Referring to FIG. 17B, it can be recognized that the actual measurement error tends to be smaller in the case where the total number of parameters is relatively larger at the appearance position of 4 which is an intermediate point of the whole processing.

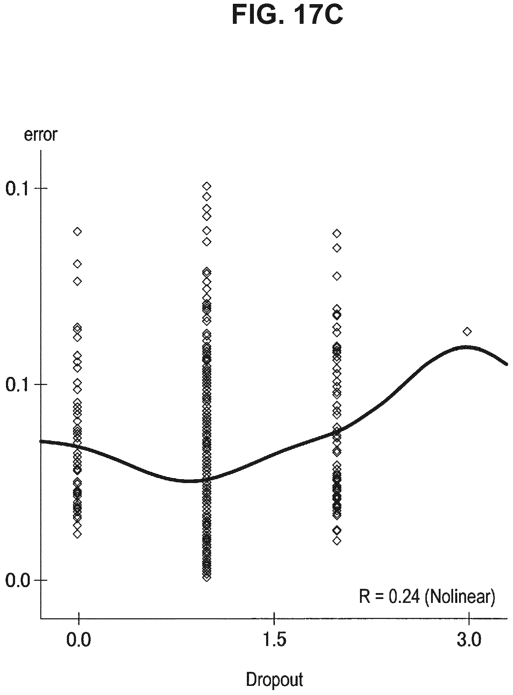

Further, FIG. 17C is a graph indicating relationship between the number of times of appearance of Dropout and the actual measurement error. FIG. 17C indicates the actual measurement error on a vertical axis and the number of times of appearance of Dropout on a horizontal axis. Referring to FIG. 17C, it can be recognized that the actual measurement error tends to be small in the case where the number of times of appearance of Dropout is one.

The evaluation result of net2vec according to the present embodiment has been described above. As described above, with the information processing method according to the present embodiment, it is possible to realize accurate prediction error measurement by using net2vec. Further, with the information processing method according to the present embodiment, it is possible to analyze a feature of a network structure which affects learning accuracy.

<<3.3. Effect of search according to the present embodiment>>

Search of a network according to the present embodiment has been described above. Subsequently, an effect of search according to the present embodiment will be described.

(Improvement of frequency relating to updating of Pareto optimal solution)

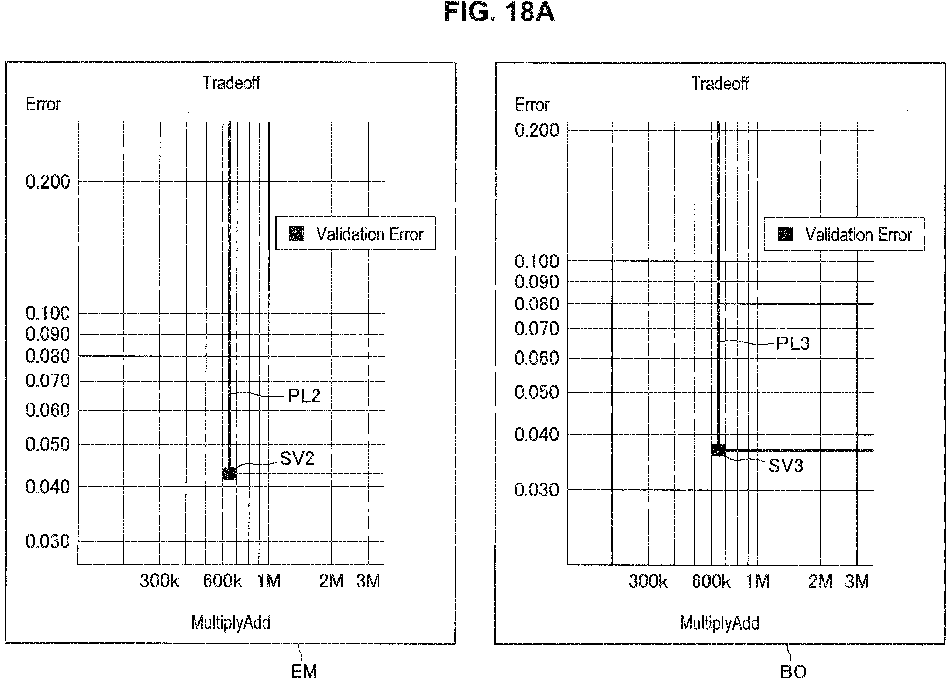

FIG. 18A to FIG. 18C are diagrams in which process of network search according to the first embodiment and process of network search according to the second embodiment are compared. FIG. 18A to FIG. 18C respectively illustrate a search screen EM according to the first embodiment in a left part and a search screen BO according to the second embodiment in a right part. Further, in the search screens EM and BO, an error is indicated on a vertical axis, and the number of times of multiply add is indicated on a horizontal axis.

FIG. 18A is a diagram illustrating trade-off information upon start of search according to the first and the second embodiments. Referring to FIG. 18A, in the search screens EM and BO, validation errors SV2 and SV3 relating to the seed network, and boundaries PL2 and PL3 of the Pareto solution are respectively indicated.

Note that, because, in the present stage, only the seed network is the evaluated network, only the validation errors SV2 or SV3 of the seed network are indicated on the boundaries PL2 and PL3 of the Pareto optimal solution in the respective search screens EM and BO.

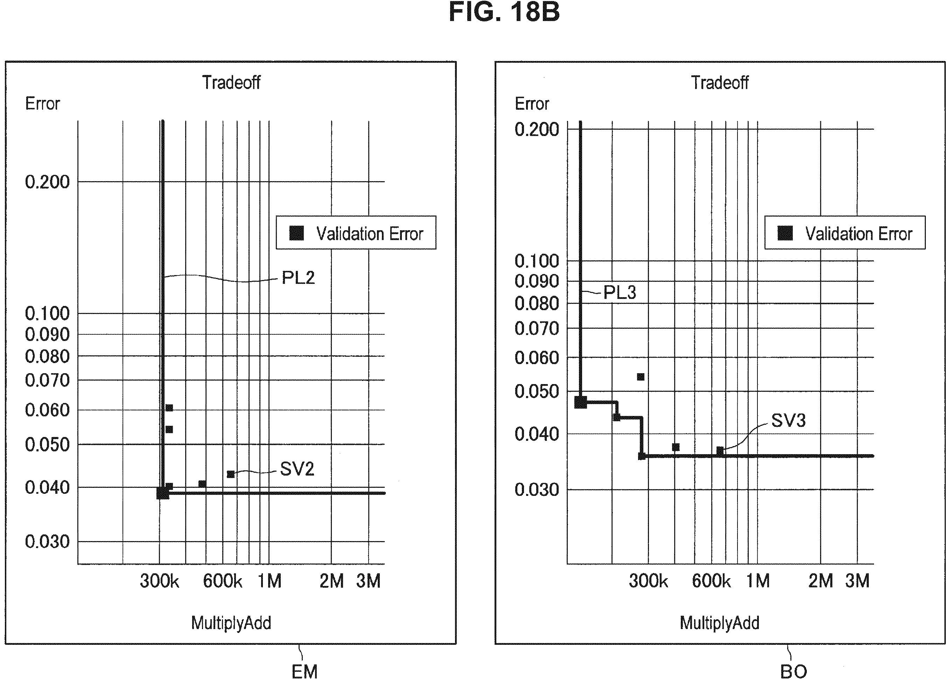

FIG. 18B is a diagram illustrating trade-off information in the case where search is repeated five times in search according to the first and the second embodiments. That is, in the search screens EM and BO illustrated in FIG. 18B, trade-off information when generation of a network by the generating unit 310 and acquisition of an evaluation result by the evaluating unit 320 are repeated five times is indicated. In this event, in search according to the second embodiment, as described above, an evaluation target is determined on the basis of measurement of a prediction error by the evaluating unit 320.

Here, referring to the search screen EM according to the first embodiment, it can be seen that the boundary PL2 of the Pareto optimal solution is updated with one Pareto optimal solution. On the other hand, in the search screen BO according to the second embodiment, the boundary PL3 of the Pareto optimal solution is updated with three Pareto optimal solutions. That is, with the information processing method according to the second embodiment, it is possible to update a Pareto optimal solution more efficiently than in the first embodiment.

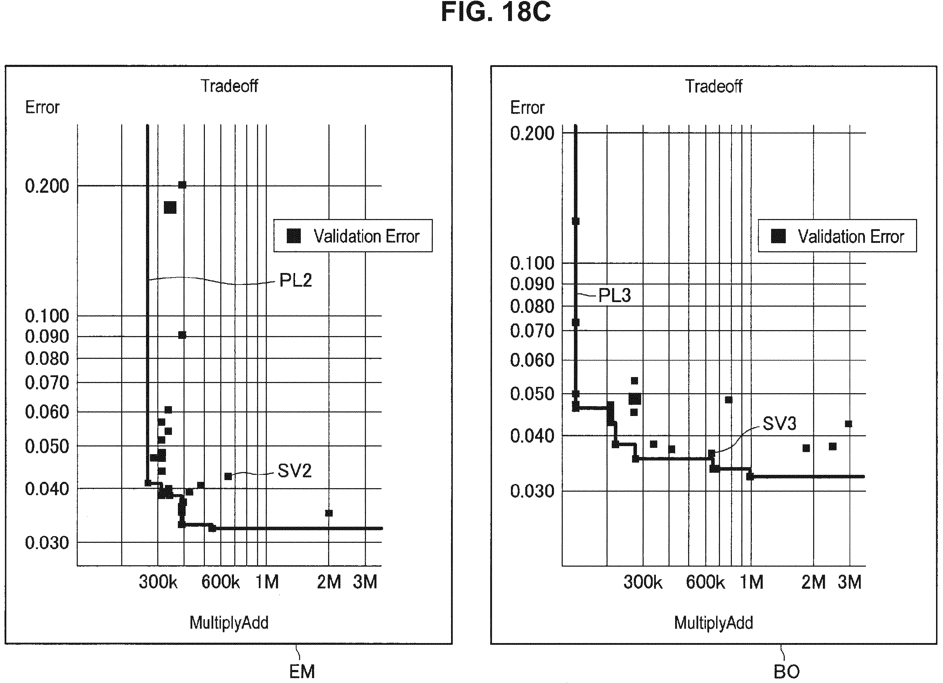

Further, FIG. 18C is a diagram illustrating trade-off information when search according to the first and the second embodiments is finished. Referring to FIG. 18C, it can be seen that, in the search screen BO according to the second embodiment, more Pareto optimal solutions are presented than in the search screen EM. Further, it can be seen that, in search according to the second embodiment, a network structure with a less calculation amount is efficiently found.

As described above, in the second embodiment according to the present disclosure, it is possible to largely improve efficiency of search by measuring prediction errors of a plurality of generated networks and selecting an evaluation target on the basis of the prediction errors. Note that, while not illustrated in FIG. 18A to FIG. 18C, in the search screen BO according to the second embodiment, an average value or a variance of the prediction errors relating to the network selected by the evaluating unit 320 may be displayed on the screen. The user can understand an expected value for which the boundary PL3 of the Pareto optimal solution is updated by confirming the above-described prediction errors.

(Evaluation result according to present embodiment)

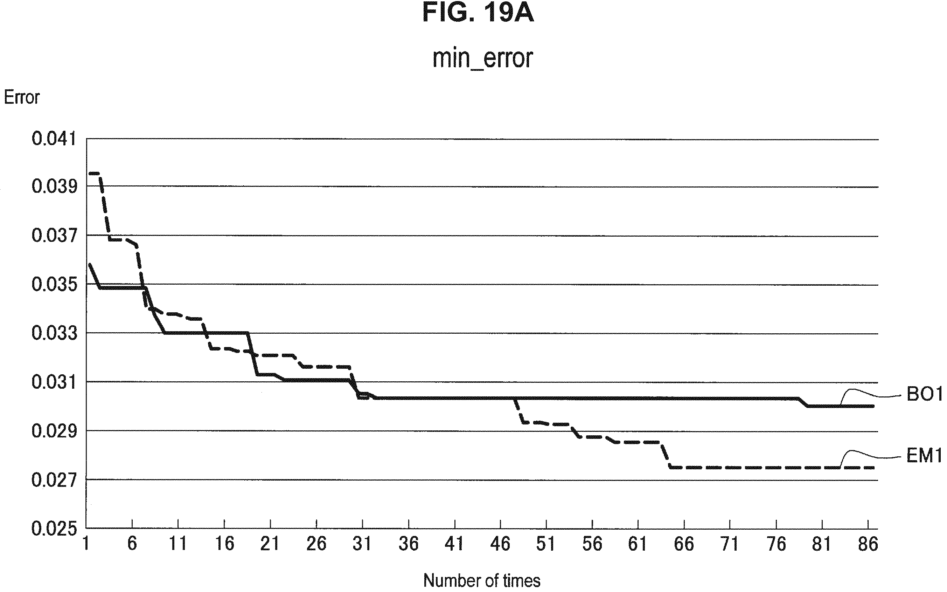

Subsequently, an evaluation result of the information processing method according to the present embodiment will be described. FIG. 19A to FIG. 19D are graphs indicating relationship between a search result of a network structure according to the first and the second embodiment and the number of times of trial of search. That is, FIG. 19A to FIG. 19D illustrate results of search which is performed while both learning accuracy and a calculation amount are taken into account using the information processing methods according to the first and the second embodiments. Note that FIG. 19A to FIG. 19D indicate the number of times of trial of search on a horizontal axis.

FIG. 19A is a graph indicating relationship between the number of times of trial of search and an actual measurement error. FIG. 19A indicates the actual measurement error on a vertical axis, and an evaluation result EM1 according to the first embodiment and an evaluation result BO1 according to the second embodiment are respectively plotted.

In FIG. 19A, for example, if attention is focused on a network which realizes an actual measurement error of 0.033, in search according to the second embodiment, the corresponding network can be detected through the number of times of trial of search of approximately 1/3 to 1/4 of that in the first embodiment. In this manner, according to the information processing method according to the second embodiment, it is possible to search for a network structure with high learning accuracy through a smaller number of times of trial of search.

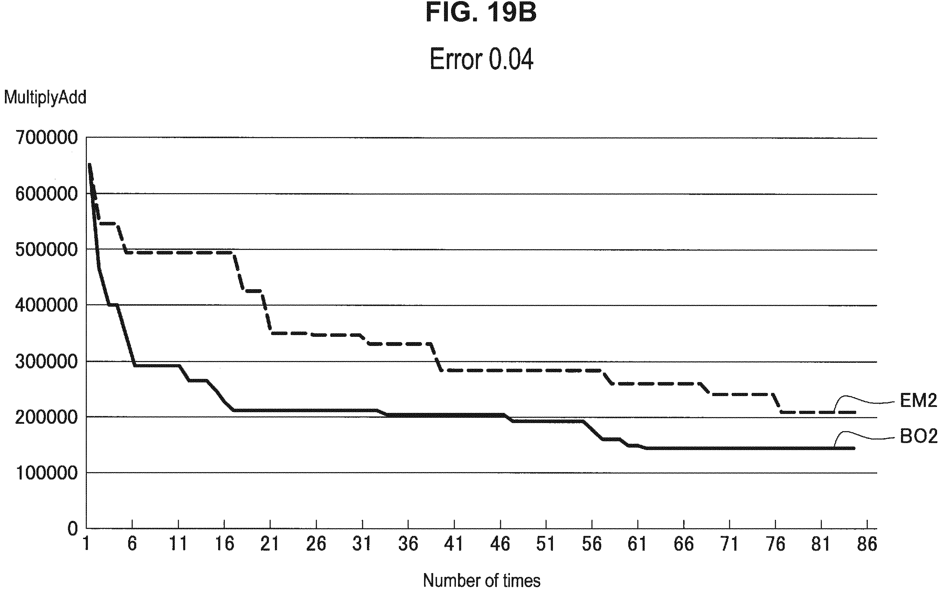

Further, FIG. 19B is a graph indicating relationship between the number of times of trial of search and the number of times of multiply add which realizes an actual measurement error of 0.04. FIG. 19B indicates the number of times of multiply add on a vertical axis, and an evaluation result EM2 according to the first embodiment and an evaluation result B02 according to the second embodiment are respectively plotted.

In FIG. 19B, for example, if attention is focused on a network for which the number of times of multiply add falls below 300K times, in search according to the second embodiment, the corresponding network can be detected through the number of times of trial of search of approximately 1/6 to 1/7 of that in the first embodiment.

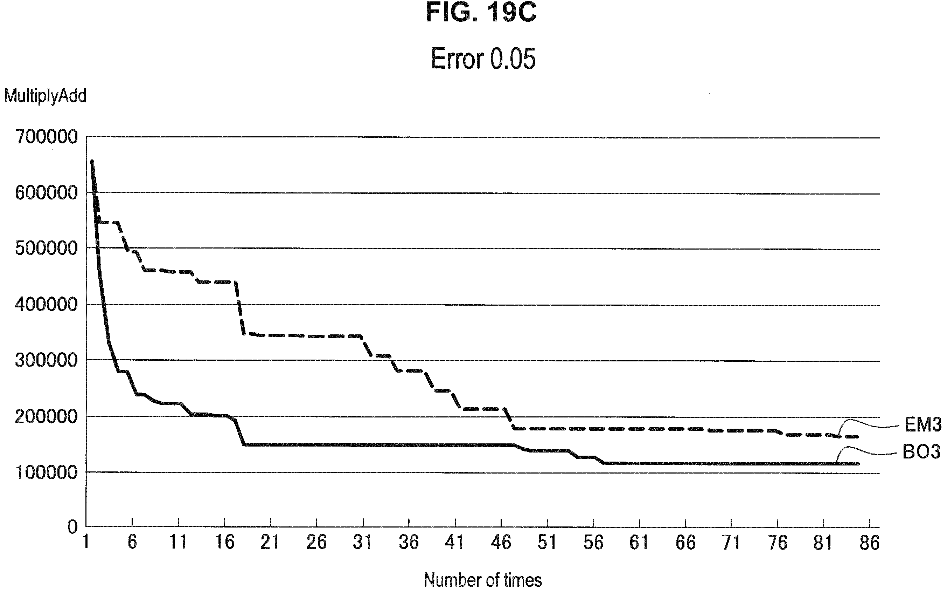

Further, FIG. 19C is a graph indicating relationship between the number of times of trial of search and the number of times of multiply add which realizes an actual measurement error of 0.05. FIG. 19C indicates the number of times of multiply add on a vertical axis, and an evaluation result EM3 according to the first embodiment and an evaluation result BO3 according to the second embodiment are respectively plotted.

In FIG. 19C, for example, if attention is focused on a network for which the number of times of multiply add falls below 300K times, in search according to the second embodiment, the corresponding network can be detected through the number of times of trial of search of approximately 1/8 to 1/9 of that in the first embodiment.

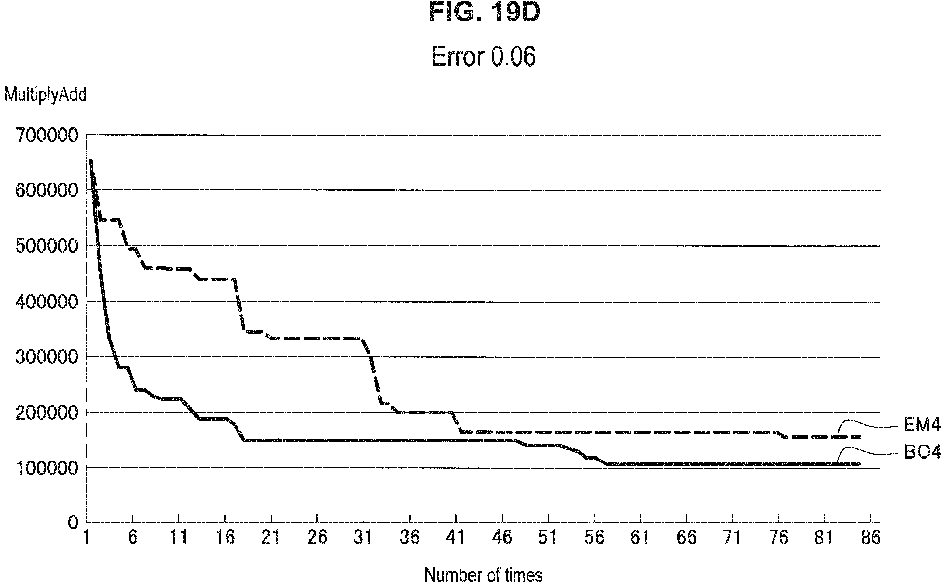

Further, FIG. 19D is a graph indicating relationship between the number of times of trial of search and the number of times of multiply add which realizes an actual measurement error of 0.06. FIG. 19D indicates the number of times of multiply add on a vertical axis, and an evaluation result EM4 according to the first embodiment and an evaluation result BO4 according to the second embodiment are respectively plotted.

In FIG. 19D, for example, if attention is focused on a network for which the number of times of multiply add falls below 300K times, in search according to the second embodiment, the corresponding network can be detected through the number of times of trial of search of approximately 1/8 of that in the first embodiment.

As illustrated in FIG. 19B to FIG. 19D above, according to the information processing method according to the present embodiment, it is possible to search for a network structure for which execution speed is considerably improved without performance being degraded, with a smaller number of times of trial of search.

<<3.4. Setting of search according to present disclosure>>

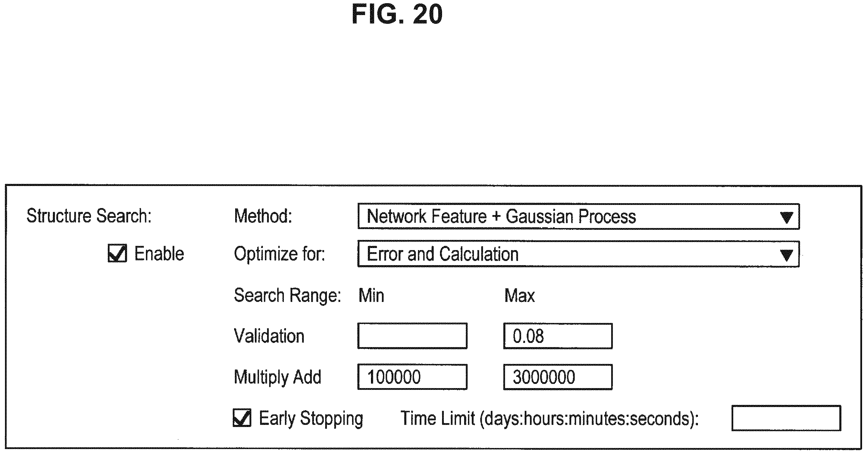

Setting of search according to the present disclosure will be described next. In search of a network structure according to the present disclosure, various settings by the user may be accepted. FIG. 20 is an example of a setting screen relating to search of the present disclosure. Here, the example illustrated in FIG. 20 may be an example of a screen displayed at the display unit 110 of the information processing apparatus 10.

Referring to FIG. 20, the setting screen relating to search of the present disclosure may include, for example, setting items relating to a search method, an optimization target, a search range, early stopping and time limit.

The user may be able to designate a search method for searching for a network structure by selecting the search method (Method). For example, the user may be able to designate search through random selection according to the first embodiment, a search method using a prediction error according to the second embodiment, or the like.

Further, the user may be able to designate a target to be optimized by selecting the optimization target (Optimize for). For example, the user may be able to designate optimization of both the learning accuracy and the calculation amount or may designate optimization of one of the learning accuracy and the calculation amount. By designating the optimization target, the user can obtain a search result which matches application.

Further, the user may be able to designate a range of a network to be found by inputting a search range (Search Range). For example, the user may be able to designate a maximum value and a minimum value relating to a validation error and the number of times of multiply add of a network to be found. The user can prevent search of a network for which a calculation amount is too large or a network for which learning accuracy is too low by designating the above-described search range.

Further, the user may be able to set early stopping relating to learning of a neural network by checking early stopping (Early Stopping). Here, the above-described early stopping setting may be setting that a network which is being learned is early stopped on the basis that it is expected that the network which is being learned does not exceed existing network performance. The user can shorten processing time relating to search by setting the above-described early stopping.

Further, the user may be able to set time limit relating to learning time of a network by inputting a value of time limit (Time Limit). Here, the above-described time limit may be limit of learning time which is acceptable for learning of one time. The user can prevent search of a network for which it takes too much time in learning by setting the above-described time limit.

Setting of search according to the present disclosure has been described above. As described above, with the information processing method according to the present disclosure, it is possible to accept various kinds of setting relating to search of a network. By this means, with the information processing method according to the present disclosure, it is possible to execute search which is more valuable for the user.

Note that search of a network according to the present disclosure may be controlled through setting other than the above-described examples. Search according to the present disclosure may be controlled on the basis of, for example, the number of times of trial of search designated by the user, and limit information of memory usage, or the like, relating to hardware in which a neural network is implemented. Setting of search according to the present disclosure can be changed as appropriate in accordance with specifications and operation relating to a neural network.

<4. Hardware configuration example>

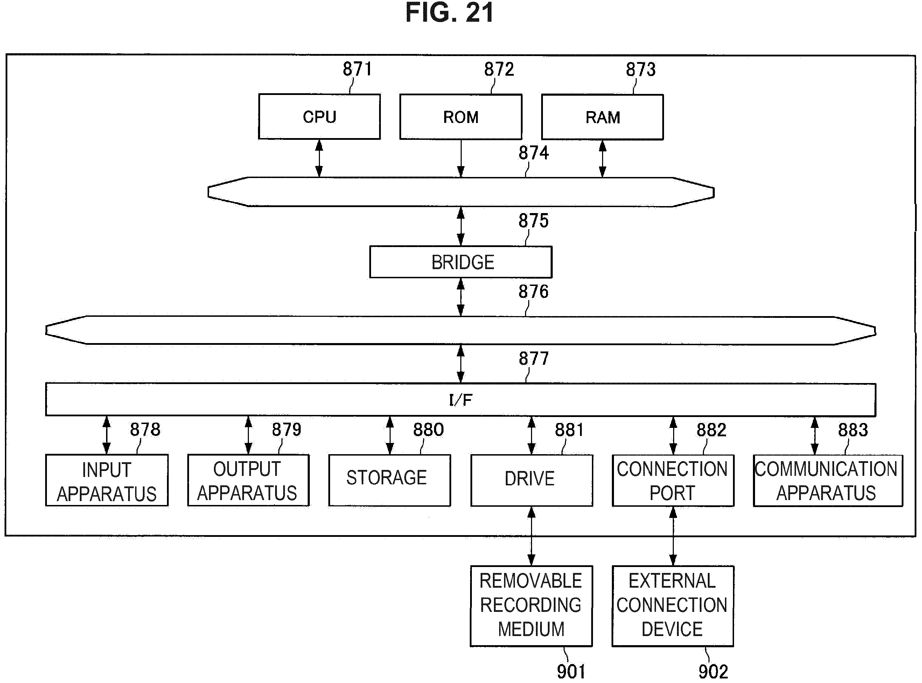

Next, a hardware configuration example common to the information processing apparatus 10 and the information processing server 30 according to the present disclosure will be described. FIG. 21 is a block diagram illustrating a hardware configuration example of each of the information processing apparatus 10 and the information processing server 30 according to the present disclosure. Referring to FIG. 21, each of the information processing apparatus 10 and the information processing server 30 includes, for example, a CPU 871, a ROM 872, a RAM 873, a host bus 874, a bridge 875, an external bus 876, an interface 877, an input apparatus 878, an output apparatus 879, a storage 880, a drive 881, a connection port 882, and a communication apparatus 883. The hardware configuration described here is an example, and some components may be omitted. A component other than components described here may be further added.

(CPU 871)

The CPU 871 functions as, for example, an operation processing device or a control device and controls operations of all or some of the components on the basis of various kinds of programs recorded in the ROM 872, the RAM 873, the storage 880, or a removable recording medium 901.

(ROM 872 and RAM 873)

The ROM 872 is a device that stores programs read by the CPU 871, data used for operations, and the like. For example, a program read by the CPU 871, various kinds of parameters that appropriately change when the program is executed, and the like are temporarily or permanently stored in the RAM 873.

(Host bus 874, bridge 875, external bus 876, and interface 877)

For example, the CPU 871, the ROM 872, and the RAM 873 are connected to one another the host bus 874 capable of performing high-speed data transmission. On the other hand, for example, the host bus 874 is connected to an external bus 876 having a relatively low data transmission speed via the bridge 875. Further, the external bus 876 is connected to various components via the interface 877.

(Input apparatus 878)

Examples of the input apparatus 878 include a mouse, a keyboard, a touch panel, a button, a switch, and a lever. Further, a remote controller capable of transmitting a control signal using infrared rays or other radio waves (hereinafter referred to as a remote controller) may be used as the input apparatus 878.

(Output apparatus 879)

The output apparatus 879 is a device which is capable of notifying the user of acquired information visually or audibly such as, for example, a display device such as a cathode ray tube (CRT), an LCD, or an organic EL, an audio output device such as a speaker or a headphone, a printer, a mobile phone, a facsimile.

(Storage 880)

The storage 880 is a device that stores various kinds of data. Examples of the storage 880 include a magnetic storage device such as a hard disk drive (HDD), a semiconductor storage device, an optical storage device, and a magneto-optical storage device.

(Drive 881)

The drive 881 is a device that reads out information recorded in the removable recording medium 901 such as a magnetic disk, an optical disk, a magneto-optical disk, a semiconductor memory, or the like or writes information in the removable recording medium 901.

(Removable recording medium 901)

Examples of the removable recording medium 901 include a DVD medium, a Blu-ray (a registered trademark) medium, an HD DVD medium, and various kinds of semiconductor storage media. It will be appreciated that the removable recording medium 901 may be, for example, an IC card in which a non-contact type IC chip is mounted, an electronic device, or the like.

(Connection port 882)

The connection port 882 is a port for connecting an external connection device 902 such as a universal serial bus (USB) port, an IEEE 1394 port, a small computer system interface (SCSI), an RS-232C port, or an optical audio terminal.

(External connection device 902)

Examples of the external connection device 902 include a printer, a portable music player, a digital camera, a digital video camera, and an IC recorder.

(Communication apparatus 883)

The communication apparatus 883 is a communication device that establishes a connection with the network, and examples of the communication apparatus 883 include a communication card for wired or wireless LAN, Bluetooth (a registered trademark), or wireless USB (WUSB), an optical communication router, an asymmetric digital subscriber line (ADSL) router, and various kinds of communication modems.

<5. Conclusion>

As described above, one feature of the information processing method according to the present disclosure is that another neural network with a different network structure is generated from an evaluated neural network. Further, with the information processing method according to the present disclosure, it is possible to acquire an evaluation result of the generated neural network and update a Pareto optimal solution relating to the evaluated neural network on the basis of the acquisition result. Still further, with the information processing method according to the present disclosure, it is possible to generate another neural network with a different network structure from a neural network relating to a Pareto optimal solution. According to such a configuration, it is possible to search for a network structure in accordance with an environment more efficiently.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, while, in the above-described embodiment, a case has been described as an example where the information processing server 30 generates a neural network and updates a Pareto optimal solution, the present technology is not limited to such an example. For example, generation of a neural network and updating of a Pareto optimal solution may be realized by the information processing apparatus 10. In this case, the form control unit 130 of the information processing apparatus 10 may generate another network on the basis of the seed network and transmit information relating to the other network to the information processing server 30. Further, the form control unit 130 may update a Pareto optimal solution on the basis of an evaluation result of a network acquired from the information processing server 30 and cause the Pareto optimal solution to be displayed at the display unit 110.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.

(1) An information processing method including:

generating, by a processor, another neural network with a different network structure from an evaluated neural network;
acquiring an evaluation result of the generated neural network;
updating a Pareto optimal solution relating to an evaluated neural network on a basis of the evaluation result of the generated neural network; and
generating another neural network with a different network structure from a neural network relating to the Pareto optimal solution.

(2) The information processing method according to (1),
in which the other neural network is generated through genetic operation.
(3) The information processing method according to (2),
in which the genetic operation includes at least one of mutation and crossover.
(4) The information processing method according to (3),
in which the mutation includes insertion of a layer, deletion of a layer, change of a layer type, change of a parameter, a graph branch or deletion of a graph branch.
(5) The information processing method according to any of (1) to (4),
in which the evaluation result includes a calculation amount and at least one of a training error and a validation error.
(6) The information processing method according to any of (1) to (5), further including:

measuring a prediction error of the generated neural network,
in which the prediction error includes at least one of a predicted training error and a predicted validation error, and
acquiring the evaluation result includes acquiring the evaluation result of a neural network selected on a basis of the prediction error.

(7) The information processing method according to (6),
in which the prediction error is measured on a basis of a feature amount of a network structure relating to the generated neural network.
(8) The information processing method according to (6) or (7),
in which the prediction error includes an average and a variance of predicted errors, and
acquiring the evaluation result includes acquiring the evaluation result of a neural network selected on a basis of the average and the variance of the predicted errors and a calculation amount.
(9) The information processing method according to (8),
in which acquiring the evaluation result includes acquiring the evaluation result of a neural network selected on a basis of an expected value of an area in which a boundary relating to the Pareto optimal solution is updated.
(10) The information processing method according to any of (7) to (9),
in which the feature amount of the network structure is calculated on a basis of at least one of an appearance frequency of a layer, a histogram relating to appearance positions of layers, a number of branches for each of the appearance positions, and statistic of main parameters for each of the appearance positions.

(11) The information processing method according to any of (5) to (10), further including:

presenting a candidate selected from the neural network relating to the Pareto optimal solution to a user, in which the candidate includes at least one of a neural network relating to maximum performance, a neural network relating to an intermediate solution and a neural network relating to a minimum calculation amount.

(12) The information processing method according to any of (1) to (11), in which another neural network is generated using a neural network which changes a network structure of an input neural network.

(13) The information processing method according to any of (6) to (10), in which measuring the prediction error includes measuring the prediction error using a neural network which recognizes a network structure of an input neural network.

(14) An information processing apparatus including:

a generating unit configured to generate another neural network with a different network structure from an evaluated neural network; and
an evaluating unit configured to acquire an evaluation result of the generated neural network,
in which the evaluating unit updates a Pareto optimal solution relating to an evaluated neural network on a basis of the evaluation result of the generated neural network, and
the generating unit generates another neural network with a different network structure from a neural network relating to the Pareto optimal solution.

(15) An information processing apparatus including:

an input unit configured to accept designation of a neural network by a user; and
a control unit configured to control presentation of a Pareto optimal solution relating to an evaluated neural network,
in which the control unit presents a Pareto optimal solution updated on a basis of an evaluation result of another neural network generated from the neural network designated by the user.

(16) An information processing method including:
generating, by a processor, another neural network with a different network structure from one neural network; and updating the other neural network as a Pareto optimal solution in a case where an evaluation result of the other generated neural network exceeds an evaluation result of the one neural network.

(17) The information processing method according to (16), in which the evaluation result includes at least one of a calculation amount and an error, and updating the Pareto optimal solution further includes making one of the calculation amount and the error smaller.

(18) The information processing method according to (16) or (17), in which generating the other neural network further includes generating the other neural network through genetic operation, and the genetic operation includes at least one of mutation and crossover.

(19) The information processing method according to any of (16) to (18), in which updating the Pareto optimal solution further includes comparing an evaluation result of another neural network acquired on a basis of advance error prediction and the evaluation result of the one neural network.

(20) The information processing method according to any of (16) to (19), further including:
generating another new neural network using the other neural network updated as the Pareto optimal solution as the one neural network.

Reference Signs List

10      information processing apparatus
110     display unit
120     input unit
130     form control unit
140     server communication unit
20      network

30      information processing server
310     generating unit
320     evaluating unit
330     apparatus communication unit

**Claims**

1.  An information processing method comprising:

    generating, by a processor, another neural network with a different network structure from an evaluated neural network;
    acquiring an evaluation result of the generated neural network;
    updating a Pareto optimal solution relating to an evaluated neural network on a basis of the evaluation result of the generated neural network; and
    generating another neural network with a different network structure from a neural network relating to the Pareto optimal solution.

2.  The information processing method according to claim 1,
    wherein the other neural network is generated through genetic operation.

3.  The information processing method according to claim 2,
    wherein the genetic operation includes at least one of mutation and crossover.

4.  The information processing method according to claim 3,
    wherein the mutation includes insertion of a layer, deletion of a layer, change of a layer type, change of a parameter, a graph branch or deletion of a graph branch.

5.  The information processing method according to claim 4,
    wherein the evaluation result includes a calculation amount and at least one of a training error and a validation error.

6.  The information processing method according to claim 5, further comprising:

    measuring a prediction error of the generated neural network,
    wherein the prediction error includes at least one of a predicted training error and a predicted validation error, and acquiring the evaluation result includes acquiring the evaluation result of a neural network selected on a basis of the prediction error.

7.  The information processing method according to claim 6,
    wherein the prediction error is measured on a basis of a feature amount of a network structure relating to the generated neural network.

8.  The information processing method according to claim 7,
    wherein the prediction error includes an average and a variance of predicted errors, and acquiring the evaluation result includes acquiring the evaluation result of a neural network selected on a basis of the average and the variance of the predicted errors and a calculation amount.

9.  The information processing method according to claim 8,
    wherein acquiring the evaluation result includes acquiring the evaluation result of a neural network selected on a basis of an expected value of an area in which a boundary relating to the Pareto optimal solution is updated.

10. The information processing method according to claim 7,
    wherein the feature amount of the network structure is calculated on a basis of at least one of an appearance frequency of a layer, a histogram relating to appearance positions of layers, a number of branches for each of the appearance positions, and statistic of main parameters for each of the appearance positions.

11. The information processing method according to claim 5, further comprising:

presenting a candidate selected from the neural network relating to the Pareto optimal solution to a user, wherein the candidate includes at least one of a neural network relating to maximum performance, a neural network relating to an intermediate solution and a neural network relating to a minimum calculation amount.

12. The information processing method according to claim 1, wherein another neural network is generated using a neural network which changes a network structure of an input neural network.

13. The information processing method according to claim 6, wherein measuring the prediction error includes measuring the prediction error using a neural network which recognizes a network structure of an input neural network.

14. An information processing apparatus comprising:

a generating unit configured to generate another neural network with a different network structure from an evaluated neural network; and
an evaluating unit configured to acquire an evaluation result of the generated neural network,
wherein the evaluating unit updates a Pareto optimal solution relating to an evaluated neural network on a basis of the evaluation result of the generated neural network, and
the generating unit generates another neural network with a different network structure from a neural network relating to the Pareto optimal solution.

15. An information processing apparatus comprising:

an input unit configured to accept designation of a neural network by a user; and
a control unit configured to control presentation of a Pareto optimal solution relating to an evaluated neural network,
wherein the control unit presents a Pareto optimal solution updated on a basis of an evaluation result of another neural network generated from the neural network designated by the user.

16. An information processing method comprising:

generating, by a processor, another neural network with a different network structure from one neural network; and
updating the other neural network as a Pareto optimal solution in a case where an evaluation result of the other generated neural network exceeds an evaluation result of the one neural network.

17. The information processing method according to claim 16, wherein the evaluation result includes at least one of a calculation amount and an error, and updating the Pareto optimal solution further includes making one of the calculation amount and the error smaller.

18. The information processing method according to claim 16, wherein generating the other neural network further includes generating the other neural network through genetic operation, and the genetic operation includes at least one of mutation and crossover.

19. The information processing method according to claim 16, wherein updating the Pareto optimal solution further includes comparing an evaluation result of another neural network acquired on a basis of advance error prediction and the evaluation result of the one neural network.

20. The information processing method according to claim 16, further comprising:
generating another new neural network using the other neural network updated as the Pareto optimal solution as the one neural network.

# FIG. 1

| Input | |
|---|---|
| Conv1 | Karnel:5,5 Maps:20 |
| Pool1 | Shape:2,2 |
| Conv2 | Karnel:5,5 Maps:50 |
| Pool2 | Shape:2,2 |
| ip1 | |
| relu1 | |
| ip2 | |
| loss | |
| Output | |

SN

→

| Input | |
|---|---|
| Conv1 | Karnel:5,5 Maps:20 |
| Pool1 | Shape:2,2 |
| Conv2 | Karnel:5,5 Maps:50 |
| Pool2 | Shape:2,2 |
| ip1 | |
| Tanh1 | |
| ip2 | |
| loss | |
| Output | |

MN1

→

| Input | |
|---|---|
| Conv1 | Karnel:5,5 Maps:20 |
| Pool1 | Shape:2,2 |
| Conv2 | Karnel:5,5 Maps:50 |
| Abs1 | |
| Pool2 | Shape:2,2 |
| ip1 | |
| Tanh1 | |
| ip2 | |
| loss | |
| Output | |

MN2

# FIG. 2

# FIG. 3

INFORMATION PROCESSING APPARATUS — 10

DISPLAY UNIT — 110

FORM CONTROL UNIT — 130

INPUT UNIT — 120

SERVER COMMUNICATION UNIT — 140

20

30

EP 3 428 856 A1

**FIG. 4**

EP 3 428 856 A1

# FIG. 5

```
                    ┌──────────────┐
                    │    START     │
                    └──────┬───────┘
                           │                                          ▲
                           ▼        S1101                             │
                    ╱─────────────╲                                   │
                   ╱ RANDOM BRANCH ╲                                  │
                    ╲─────────────╱                                   │
              ┌───────────┴───────────┐                              │
   S1102      ▼                       ▼        S1103                 │
  ┌─┬──────────────────┬─┐    ┌─┬──────────────────┬─┐              │
  │ │    MUTATION      │ │    │ │    CROSSOVER     │ │              │
  └─┴──────────────────┴─┘    └─┴──────────────────┴─┘              │
              └───────────┬───────────┘                             │
                          ▼         S1104                           │
                   ╱─────────────╲              No                  │
                  ╱   IS THERE    ╲─────────────────────────────────►
                  ╲  CONSISTENCY? ╱                                 │
                   ╲─────────────╱                                  │
                          │ Yes                                     │
                          ▼         S1105                           │
                   ╱─────────────╲              No                  │
                  ╱ ARE INPUT AND ╲────────────────────────────────┘
                  ╲ OUTPUT SAME?  ╱
                   ╲─────────────╱
                          │ Yes
                          ▼
                    ┌──────────────┐
                    │     END      │
                    └──────────────┘
```

# FIG. 6

START

↓ S1201

RANDOM BRANCH

| S1202 | S1203 | S1204 | S1205 | S1206 | S1207 |
|---|---|---|---|---|---|
| INSERTION OF LAYER | DELETION OF LAYER | CHANGE OF LAYER TYPE | CHANGE OF PARAMETER | GRAPH BRANCH | DELETION OF GRAPH BRANCH |

END

# FIG. 7

```
        ┌──────────────┐
        │    START     │
        └──────┬───────┘
               │
               ▼
   ┌──────────────────────────┐
   │   SELECT TWO NETWORKS     │──── S1301
   └──────────┬───────────────┘
               │
               ▼
   ┌──────────────────────────┐
   │  GENERATE NEW NETWORK BY  │──── S1302
   │        CROSSOVER          │
   └──────────┬───────────────┘
               │
               ▼
        ┌──────────────┐
        │     END      │
        └──────────────┘
```

# FIG. 8A

## Tradeoff

Error

- ☐ Training Error
- ■ Validation Error

0.100

PL

0.050

SV

ST

0.000

30k    60k  100k        300k    600k  1M      2M  3M

MultiplyAdd

EP 3 428 856 A1

## FIG. 8B

Tradeoff

FIG. 8C

Tradeoff

# FIG. 10A

| | |
|---|---|
| Input | |
| Conv1 | Karnel:4,8 Maps:20 |
| Pool1 | Shape:2,2 |
| Conv2 | Karnel:3,3 Maps:28 |
| Pool2 | Shape:2,4 |
| ip1 | |
| relu1 | |
| ip2 | |
| relu2 | |
| Output | |

MN3

# FIG. 10B

| | |
|---|---|
| Input | |
| Conv1 | Karnel:5,5 Maps:11 |
| Abs1 | |
| Pool1 | Shape:2,2 |
| Conv2 | Karnel:5,3 Maps:50 |
| Relu1 | |
| Pool2 | Shape:2,2 |
| ip1 | |
| Dropout | |
| relu2 | |
| ip2 | |
| loss | |
| Output | |

MN4

# FIG. 11A

Categorical Cross Entropy

Number of times

EP 3 428 856 A1

# FIG. 11B

# FIG. 12

M1

Mutation 1

Prediction error: 0.03

M2

Mutation 2

Prediction error: 0.06

M3

Mutation 3

Prediction error: 0.04

M4

Mutation 4

Prediction error: 0.05

O1

Original Network

Error: 0.05

# FIG. 13

# FIG. 14

# FIG. 15

# FIG. 16

Correl = 0.77273774

| Feature | Contribution Ratio(%) |
|---|---|
| Max_Output_at_0 | 21.2 |
| Avg_Output_at_2 | 21.2 |
| Sum_CostParameter_at_4 | 20.6 |
| Sum_CostMultiplyAdd_at_0 | 20.6 |
| Dropout | 6.0 |
| SumPooling | 5.6 |
| Sum_OutShape_of_Affine_at_3 | 2.4 |
| Abs_to_MaxPooling | 1.4 |
| MaxPooling | 1.0 |

# FIG. 17A

# FIG. 17B

# FIG. 17C

# FIG. 18A

EM

BO

EP 3 428 856 A1

**FIG. 18B**

Tradeoff

EM

Error

Tradeoff

BO

Error

**FIG. 18C**

EM

BO

EP 3 428 856 A1

# FIG. 19A

## min_error

EP 3 428 856 A1

## FIG. 19B

## Error 0.04

EP 3 428 856 A1

# FIG. 19C

## Error 0.05

MultiplyAdd

Number of times

EP 3 428 856 A1

# FIG. 19D

## Error 0.06

EP 3 428 856 A1

# FIG. 20

EP 3 428 856 A1

| | | |
|---|---|---|
| Structure Search: | Method: | Network Feature + Gaussian Process ▼ |
| ☑ Enable | Optimize for: | Error and Calculation ▼ |

Search Range:    Min         Max

Validation       [     ]     [ 0.08 ]

Multiply Add    [ 100000 ]    [ 3000000 ]

☑ Early Stopping     Time Limit (days:hours:minutes:seconds):    [     ]

# FIG. 21

871 CPU
872 ROM
873 RAM
874
875 BRIDGE
876
877 I/F
878 INPUT APPARATUS
879 OUTPUT APPARATUS
880 STORAGE
881 DRIVE
882 CONNECTION PORT
883 COMMUNICATION APPARATUS
901 REMOVABLE RECORDING MEDIUM
902 EXTERNAL CONNECTION DEVICE

EP 3 428 856 A1

## INTERNATIONAL SEARCH REPORT

| International application No. |
| --- |
| PCT/JP2016/085249 |

| A. CLASSIFICATION OF SUBJECT MATTER |
| --- |
| G06N3/08(2006.01)i |

According to International Patent Classification (IPC) or to both national classification and IPC

| B. FIELDS SEARCHED |
| --- |

Minimum documentation searched (classification system followed by classification symbols)
G06N3/08

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
IEEE Xplore

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y<br>A | JIN, Yaochu et al., Neural network regularization and ensembling using multi-objective evolutionary algorithms, Proceedings of the 2004 Congress on Evolutionary Computation, 2004.06.23, pp.1-8 | 1-4,14-20<br>5-7,10-12<br>8-9,13 |
| Y | Kazumi SAITO et al., "Applying Second-Order Learning Algorithm BPQ to Classification Problems and Evaluating It", The Transactions of the Institute of Electronics, Information and Communication Engineers (J81-D-II), no.2, 25 February 1998 (25.02.1998), pages 412 to 420 | 5-7,10-11 |
| Y<br>A | JP 2001-331780 A (Fujitsu Ltd.), 30 November 2001 (30.11.2001), paragraph [0024] (Family: none) | 11<br>1-10,12-20 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 December 2016 (21.12.16) | 10 January 2017 (10.01.17) |

| Name and mailing address of the ISA/<br>Japan Patent Office<br>3-4-3,Kasumigaseki,Chiyoda-ku,<br>Tokyo 100-8915,Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2016/085249 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-288625 A  (Mitsubishi Heavy Industries, Ltd.), 04 October 2002 (04.10.2002), paragraph [0063] (Family: none) | 12 |
| A | US 2005/0246297 A1  (CHEN, Dingding et al.), 03 November 2005 (03.11.2005), entire text; all drawings & WO 2005/098647 A2      & BR PI0509129 A & MX PA06011012 A | 1-20 |
| A | JP 2004-163446 A  (Japan Science and Technology Agency), 10 June 2004 (10.06.2004), paragraph [0042] (Family: none) | 1-20 |
| A | JP 9-6881 A  (Toyo Electric Mfg. Co., Ltd.), 10 January 1997 (10.01.1997), entire text; all drawings (Family: none) | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009048266 A